# EUROPEAN PATENT APPLICATION

(11) **EP 1 993 282 A1**
(43) Date of publication of application: **19.11.2008**
(21) Application number: 08156167.2
(22) Date of filing: 14.05.2008
(51) Int. Cl.: H04N 5/445, H04N 7/173

(54) **Receiving device, information providing device, information providing system, information providing method and programs**

(30) Priority: 16.05.2007 JP 2007130909
(71) Applicant: Sony Corporation, Tokyo 108-0075 (JP)
(72) Inventor: Fukuda, Kazuhiro, Tokyo 108-0075 (JP); Maruyama, Tetsuo, Tokyo 108-0075 (JP)
(74) Representative: Körber, Martin Hans

(57) **Abstract**

There is provided an information providing device that includes a program listing information transmission portion that transmits, to a receiving device, program listing information showing a plurality of programs currently available for viewing; a related information storage portion that links to a program and stores related information in which a plurality of information items pertaining to a program have been edited to be displayed in order; a program designation information receiving portion that receives, from the receiving device, program designation information designating a program currently available for viewing; a related information extraction portion that extracts from the related information storage portion the related information being applicable to the program designated by the program designation information; and a related information transmission portion that transmits the extracted related information to the receiving device. Thus the information pertaining to the programs currently available for viewing can be effectively provided through a simple operation.

## Description

### CROSS REFERENCES TO RELATED APPLICATION(S)

The present invention contains subject matter related to Japanese Patent Application JP 2007-130909 filed in the Japan Patent Office on May 16, 2007, the entire contents of which being incorporated herein by reference.

### BACKGROUND OF THE INVENTION

### 1. Field of the Invention

The present invention relates to a receiving device, an information providing device, an information providing system, an information providing method, and programs.

### 2. Description of the Related Art

In recent years, systems have become widespread in which a provider of various types of content transmits video and audio information related to programs, and a user uses a receiver terminal to receive, display, play back, and view the video and audio information. In these kinds of systems, information that pertains to the programs is transmitted together with the video and audio information.

This makes it possible for the user of the receiver terminal to browse the information that pertains to the programs, such as Electronic Program Guide (EPG) information, data broadcast information, and the like. The EPG information may be, for example, information such as planned broadcast times and summaries of a plurality of the programs, displayed by the day or by the week. The data broadcast information may be supplemental information that is provided about the program that is currently being viewed.

In Japanese Patent Application Publication No. JP-A-2005-94355, an information display device is disclosed that, while displaying the video information for the program that is currently being viewed, sequentially displays the EPG information for other programs that are currently available for viewing.

### SUMMARY OF THE INVENTION

However, the content of the information that is provided as the EPG information is limited, and the information is not linked to the programs that are currently available for viewing (program changes and the like cannot be updated in real time). On the other hand, the information that is provided as the data broadcast information includes information that pertains to the programs and is linked to the programs that are currently available for viewing, but the information is provided only to the user of a data broadcast service. Moreover, the EPG information and the data broadcast information cannot be browsed while recorded video information is being viewed. Therefore, while viewing a program video information or a recorded video information, the user cannot reliably browse the information that pertains to the programs that are currently available for viewing.

While browsing the EPG information, the user operates a remote control or the like that is furnished with the receiver terminal, for example, in order to select desired information from the information that is displayed in a listing format. On the other hand, to select desired information while browsing the data broadcast information, the user operates the remote control or the like according to operation methods that are determined by the individual providers of the data broadcast information. Moreover, in some cases, to select desired information while browsing the EPG information and the data broadcast information, the user performs an operation using a different user interface (a remote control, an operation button, or the like). Therefore, in order to acquire information that pertains to a program while viewing a program video information or a recorded video information, the user, who is in a passive orientation, is required to actively perform a cumbersome operation.

Conversely, the content provider cannot reliably provide the information that pertains to the programs that are currently available for viewing to the user who is currently viewing a program video information or a recorded video information. Furthermore, the content provider cannot provide the information that pertains to the programs to the user without requiring the user to perform a cumbersome operation, so as a result, the content provider cannot efficiently prompt the user to access the information that is provided. Moreover, each individual content provider provides information only for the programs that that content provider provides. Thus the methods of providing and displaying the information, and the operation methods that are required of the user, are not standardized, so the information that pertains to the programs cannot be provided to the user effectively.

It is desirable to provide a receiving device, an information providing device, an information providing system, an information providing method, and a program that are capable of effectively providing, through a simple operation, information that pertains to the programs that are currently available for viewing.

According to an embodiment of the present invention, there is provided a receiving device that is connected through a communication network to an information providing device that provides information that pertains to a program. The receiving device includes a channel selection portion, a program listing information receiving portion, a selecting and entering portion, a program designation information transmission portion, a related information receiving portion, and a display control portion. The channel selection portion selects a program to receive. The program listing information receiving portion receives, from the information providing device, program listing information that shows a plurality of programs that are currently available for viewing. The selecting and entering portion selects a program based on the program listing information and enters a program selection. The program designation information transmission portion transmits to the information providing device, program designation information that designates one of a program selected by selecting a channel and a program selected or entered based on the program listing information. The related information receiving portion receives, from the information providing device, related information in which a plurality of information items that pertain to a program have been edited and linked to the program, the related information being applicable to the program that is designated by the program designation information. The display control portion controls display of video information and the program listing information for one of a selected program and an entered program and controls sequential display of the plurality of the information items that are included in the received related information.

In this configuration, the program listing information that shows the plurality of the programs that are currently available for viewing is provided from the information providing device and displayed on the receiving device. The display of the video information for the program is switched by the channel selection operation or the selecting and entering operation that is based on the program listing information. The program designation information that designates the program for which the channel was selected, or that was selected or entered, is transmitted to the information providing device. The related information in which a plurality of information items that pertain to a program have been edited and linked to the program, and that is applicable to the program that is designated by the program designation information, is received from the information providing device. The display of the video information and the program listing information for the one of the selected program and the entered program is controlled, and the sequential display of the plurality of the information items that are included in the received related information is controlled. Thus, because the related information is provided through one of the operations of selecting the program by selecting the channel, selecting the program, and entering the program, the user, by performing a simple operation, can reliably browse the information that pertains to the programs that are currently available for viewing. Furthermore, because the sequential display of the plurality of the information items that are included in the received related information is controlled, the user can efficiently browse the information that pertains to the programs in a form that is easy to read.

The related information receiving portion may also receive from the information providing device, as the related information, scenario information in which at least one of information sets have been put into the form of a scenario. The information set may include one of only a program information item that is linked to a program and a combination of the program information item and at least one of service provision information items that are linked to the program information item. In this configuration, because the sequential display of the program information item and the service provision information items that are included in the scenario information is controlled, the user can easily browse the information that pertains to the programs that are currently available for viewing.

The receiving device may also include a related information processing portion that processes the related information that is received from the information providing device. The related information processing portion may process the related information such that the related information processing portion causes the display control portion to control display of each of a plurality of the information sets that are linked to the program in accordance with a predetermined prioritization and to control display of the program information item that is included in each of the information sets, as well as display of a plurality of the service provision information items that are linked to the program information item, in accordance with a predetermined prioritization. In this configuration, because the display is controlled such that the program information item and the service provision information item that are included in the scenario information are displayed in order by the information set in accordance with the prioritization, the user can efficiently browse the information that pertains to the programs that are currently available for viewing.

The related information processing portion may also process the related information such that the related information processing portion causes the display control portion to perform control such that the scenario information is displayed repeatedly. In this configuration, because the display is controlled such that the scenario information is displayed repeatedly, the user can easily browse the information that pertains to the programs that are currently available for viewing.

The receiving device may also include a processing request transmission portion and a detail information receiving portion. In a case where a selection of the program information item has been entered, the processing request transmission portion may transmit to the information providing device a processing request that requests provision of detail information that pertains to the selected program information item. In a case where a selection of the service provision information item has been entered, the processing request transmission portion may transmit to the information providing device a processing request that requests provision of detail information that pertains to the selected service provision information item. The detail information receiving portion may receive from the information providing device the detail information that is applicable to the processing request. The display control portion may be caused to perform control such that the received detail information is displayed. In this configuration, because the display of the detail information that pertains to the program information item and the service provision information item is controlled, the user can easily browse the detail information that pertains to the programs that are currently available for viewing.

In a case where the channel selection portion and the selecting and entering portion are not operated for a specified period of time while the program listing information is being displayed, the program designation information transmission portion may transmit to the information providing device, in order, the program designation information that designates each of the plurality of the programs that are included in the program listing information. Based on the program designation information, the display control portion may perform control such that the related information that is received from the information providing device is displayed in order. In this configuration, even if no channel selection operation or selection entering operation is performed, the information items that are included in the ECG scenarios that respectively pertain to the plurality of the programs that are included in the program listing information are displayed in order, so the user can easily browse the information that pertains to the programs that are currently available for viewing.

The display control portion may perform control the display in a video display area, a program listing information display area, and a related information display area. The video display area may display one of prerecorded video and video for one of a selected program and an entered program. The program listing information display area may display the program listing information. The related information display area may display the related information. The program listing information display area and the related information display area may be disposed such that they are not superimposed on the video display area. In this configuration, the program listing information and the related information are displayed without being superimposed on the display of the program video information or the recorded video information, so the user can browse the information that pertains to the programs that are currently available for viewing in a form that is easy to read and can watch the program video information or the recorded video information at the same time.

According to another embodiment of the present invention, there is provided an information providing device that is connected through a communication network to a receiving device that receives a program. The information providing device includes a program listing information transmission portion, a related information storage portion, a program designation information receiving portion, a related information extraction portion, and a related information transmission portion. The program listing information transmission portion transmits, to the receiving device, program listing information that shows a plurality of programs that are currently available for viewing. The related information storage portion links to a program and stores related information in which a plurality of information items that pertain to the program that have been edited such that they will be displayed in order. The program designation information receiving portion receives from the receiving device, program designation information that designates one of a program selected by selecting a channel and a program selected or entered based on the program listing information. The related information extraction portion extracts from the related information storage portion the related information that is applicable to the program that is designated by the program designation information. The related information transmission portion transmits the extracted related information to the receiving device.

In this configuration, the related information in which a plurality of information items that pertain to the program have been edited such that they will be displayed in order is linked to the program and stored by the information providing device. The program designation information that designates one of the program selected by selecting a channel and the program selected or entered based on the program listing information. The related information that is applicable to the program that is designated by the program designation information is extracted, and the extracted related information is transmitted to the receiving device. Because the related information has been edited such that the plurality of information items that pertain to the program will be displayed in order, a content provider can, through the information providing device, effectively provide to the user, in a form that is easy to read, the information that pertains to the programs that are currently available for viewing.

The related information storage portion may also link to a program and store, as the related information, scenario information in which at least one of information sets have been put into the form of a scenario. The information set may include one of only a program information item that is linked to a program and a combination of the program information item and at least one of service provision information items that are linked to the program information item. In this configuration, because the related information has been edited such that the program information item and the service provision information item that have been put into the form of the scenario will be displayed in order, the content provider can, through the information providing device, effectively provide to the user information that prompts the user to select a program and to utilize various types of services.

The related information storage portion may also link to a program and store, as the related information, scenario information that includes a plurality of the information sets that are linked to the program and prioritized. Each of the information sets may include one of only the program information item and a combination of the program information item and a plurality of the service provision information items that are linked to the program information item and prioritized. In this configuration, because the related information has been edited such that the program information item and the service provision information items are displayed in order by the information set in accordance with the prioritization, the content provider can, through the information providing device, effectively provide to the user, in accordance with the prioritization, the information that prompts the user to select a program and to utilize the various types of services.

The information providing device may also include a detail information linking portion, a processing request receiving portion, a detail information acquisition portion, and a detail information transmission portion. The detail information linking portion may individually link to the program information item and the service provision information item detail information that pertains to the program information item and the service provision information item. The processing request receiving portion may receive from the receiving device a processing request that requests provision of one of the detail information that pertains to the selected program information item and the detail information that pertains to the service provision information item. The detail information acquisition portion may acquire the detail information that is requested by the received processing request. The detail information transmission portion may transmit to the receiving device the detail information that is acquired based on the processing request. In this configuration, because the detail information that pertains to the program information item and the service provision information item is individually linked to the program information item and the service provision information item, an information provider can effectively provide to the user the detail information that prompts the user to select a program and to utilize the various types of services.

The detail information linking portion may also link to the service provision information item information for executing processing that is necessary for provision of a service that is based on the service provision information item. In this configuration, because the information for executing processing that is necessary for the provision of the service is linked to the service provision information item, the information provider can effectively prompt the user to utilize the service that is based on the service provision information item.

According to another embodiment of the present invention, there is provided an information providing system that includes a receiving device that receives a program and an information providing device that provides information that pertains to the program, the receiving device and the information providing device being connected through a communication network. The receiving device includes a channel selection portion, a program listing information receiving portion, a selecting and entering portion, a program designation information transmission portion, a related information receiving portion, and a display control portion. The channel selection portion selects a program to receive. The program listing information receiving portion receives, from the information providing device, program listing information that shows a plurality of programs that are currently available for viewing. The selecting and entering portion selects a program based on the program listing information and enters a program selection. The program designation information transmission portion transmits to the information providing device, program designation information that designates one of a program selected by selecting a channel and a program selected or entered based on the program listing information. The related information receiving portion receives related information from the information providing device, based on the program designation information. The display control portion controls display of video information and the program listing information for one of a selected program and an entered program and controls sequential display of the plurality of the information items that are included in the received related information. The information providing device includes a program listing information transmission portion, a related information storage portion, a program designation information receiving portion, a related information extraction portion, and a related information transmission portion. The program listing information transmission portion transmits to the receiving device the program listing information that shows the plurality of the programs that are currently available for viewing. The related information storage portion links to a program and stores the related information in which a plurality of information items that pertain to the program have been edited. The program designation information receiving portion receives the program designation information from the receiving device. The related information extraction portion extracts from the related information storage portion the related information that is applicable to the program that is designated by the program designation information. The related information transmission portion transmits the extracted related information to the receiving device.

In this configuration, the program listing information that shows the plurality of the programs that are currently available for viewing is provided by the information providing device to the receiving device and displayed. In the receiving device, the display of the video information for the program is switched by the channel selection operation or the selecting and entering operation that is based on the program listing information, and the program designation information that designates the program for which the channel was selected, or that was selected or entered, is transmitted to the information providing device. In the information providing device, the related information in which a plurality of information items that pertain to the program have been edited is linked to the program and stored, and the related information that is applicable to the program that is designated by the program designation information is transmitted to the receiving device. In the receiving device, the display of the video information and the program listing information for the one of a selected program and an entered program is controlled, and the sequential display of the plurality of the information items that are included in the received related information is controlled. Thus, because the related information is provided through one of the operations of selecting the program by selecting the channel, selecting the program, and entering the program, the user, by performing a simple operation, can reliably browse the information that pertains to the programs that are currently available for viewing. Furthermore, because the sequential display of the plurality of the information items that are included in the received related information is controlled, the user can effectively browse the information that pertains to the programs in a form that is easy to read. At the same time, because the related information has been edited such that the plurality of information items that pertain to the program will be displayed in order, a content provider can, through the information providing device, effectively provide to the user, in a form that is easy to read, the information that pertains to the programs that are currently available for viewing.

According to another embodiment of the present invention, there is provided an information providing method that is used in an information providing system in which a receiving device that receives a program and an information providing device that provides information that pertains to the program are connected through a communication network. The information providing method includes a step of linking to a program and storing related information in which a plurality of information items that pertain to the program have been edited, the linking and storing being done by the information providing device. The information providing method also includes a step of providing to the receiving device program listing information that shows a plurality of programs that are currently available for viewing, the providing being done by the information providing device. The information providing method also includes a step of one of selecting and entering a program based on one of a selection of a program to receive and the program listing information, the one of the selecting and the entering being done by the receiving device. The information providing method also includes a step of acquiring, from the receiving device, program designation information that designates one of a program selected by selecting a channel and a program selected or entered based on the program listing information, the acquiring being done by the information providing device. The information providing method also includes a step of extracting, from the program-linked and stored related information, the related information that is applicable to the program that is designated by the program designation information and providing the extracted related information to the receiving device, the extracting and the providing being done by the information providing device. The information providing method also includes a step of controlling display of video information and the program listing information for one of a selected program and an entered program and controlling sequential display of the plurality of the information items that are included in the acquired related information, the controlling being done by the receiving device.

In this configuration, in the information providing device, the related information in which a plurality of information items that pertain to the program have been edited is linked to the program and stored. In the information providing device, the program listing information that shows the plurality of the programs that are currently available for viewing is provided to the receiving device. In the receiving device, the program designation information that designates the program for which the channel was selected, or that was selected or entered, by the channel selection operation, or the selecting and entering operation that is based on the program listing information is transmitted to the information providing device. In the information providing device, the program designation information is acquired, the related information that is applicable to the program that is designated by the program designation information is extracted, and the extracted related information is provided to the receiving device. In the receiving device, the display of the video information and the program listing information for the one of the selected program and the entered program is controlled, and the sequential display of the plurality of the information items that are included in the received related information is controlled.

According to another embodiment of the present invention, there is provided a program. The program includes instructions that command a computer to function as a channel selection portion for selecting a program to receive. The program also includes instructions that command the computer to function as a program listing information receiving portion that receives, from a information providing device, program listing information that shows a plurality of programs that are currently available for viewing. The program also includes instructions that command the computer to function as a selecting and entering portion for selecting a program based on the program listing information and entering a program selection. The program also includes instructions that command the computer to function as a program designation information transmission portion that transmits to the information providing device, program designation information that designates one of a program selected by selecting a channel and a program selected or entered based on the program listing information. The program also includes instructions that command the computer to function as a related information receiving portion that receives, from the information providing device, related information in which a plurality of information items that pertain to a program have been edited and linked to the program, the related information being applicable to the program that is designated by the program designation information. The program also includes instructions that command the computer to function as a display control portion that controls display of video information and the program listing information for one of a selected program and an entered program and controls sequential display of the plurality of the information items that are included in the received related information.

In this configuration, the program listing information that shows the plurality of the programs that are currently available for viewing is provided from the information providing device and displayed. The display of the video information for the program is switched by the channel selection operation or by the selecting and entering operation that is based on the program listing information. The program designation information that designates the program for which the channel was selected, or that was selected or entered, is transmitted to the information providing device. The related information in which a plurality of information items that pertain to a program have been edited and linked to the program, and that is applicable to the program that is designated by the program designation information, is received from the information providing device. The display of the video information and the program listing information for the one of the selected program and the entered program is controlled, and the sequential display of the plurality of the information items that are included in the received related information is controlled.

According to another embodiment of the present invention, there is provided a program. The program includes instructions that command a computer to function as a program listing information transmission portion that transmits, to a receiving device, program listing information that shows a plurality of programs that are currently available for viewing. The program also includes instructions that command the computer to function as a related information storage portion that links to a program and stores related information in which a plurality of information items that pertain to the program have been edited such that they will be displayed in order. The program also includes instructions that command the computer to function as a program designation information receiving portion that receives from the receiving device, program designation information that designates one of a program selected by selecting a channel and a program selected or entered based on the program listing information. The program also includes instructions that command the computer to function as a related information extraction portion that extracts from the related information storage portion the related information that is applicable to the program that is designated by the program designation information. The program also includes instructions that command the computer to function as a related information transmission portion that transmits the extracted related information to the receiving device.

In this configuration, the related information in which a plurality of information items that pertain to the program have been edited such that they will be displayed in order is linked to the program and stored. The program designation information that designates one of the program selected by selecting a channel and the program selected or entered based on the program listing information. The related information that is applicable to the program that is designated by the program designation information is extracted, and the extracted related information is transmitted to the receiving device.

According to the embodiments of the present invention described above, the receiving device, the information providing device, the information providing system, the information providing method, and the programs can be provided that are capable of effectively providing, through a simple operation, the information that pertains to the programs that are currently available for viewing.

### BRIEF DESCRIPTION OF THE DRAWINGS

FIG. 1 is an explanatory figure that shows a conceptual configuration of an information providing system;
FIG. 2 is an explanatory figure that shows an example of a configuration model of the information providing system;
FIG. 3 is an explanatory figure that shows an example of a conceptual configuration of a communication network and a receiving device that are included in the information providing system;
FIG. 4 is an explanatory figure that shows a conceptual functional configuration of the receiving device;
FIG. 5 is an explanatory figure that shows an example of a configuration of ECG data items that are included in an ECG scenario;
FIG. 6 is an explanatory figure that shows an example of a configuration of ancillary information that is related to the ECG scenario;
FIG. 7 is an explanatory figure that shows an example of a metadata record (a program information item) that is included in the ECG scenario;
FIG. 8 is an explanatory figure that shows an example of a metadata record (a service provision information item) that is included in the ECG scenario;
FIG. 9 is an explanatory figure that shows an example of a metadata record (a link information item that links a program, the program information, and the service provision information to one another) that is included in the ECG scenario;
FIG. 10 is an explanatory figure that shows examples of metadata records (an ECG set and the ECG scenario) that are included in the ECG scenario;
FIG. 11 is a sequence chart that shows an example of a processing flow for the ECG scenario in the entire information providing system;
FIG. 12 is a flowchart that shows a processing flow for starting the ECG scenario;
FIG. 13 is an explanatory figure that shows a display pattern of screens that are displayed during an execution of the ECG scenario;
FIG. 14 is an explanatory figure that shows a display pattern of screens that are displayed during the execution of the ECG scenario;
FIG. 15 is an explanatory figure that shows a display pattern of screens that are displayed during the execution of the ECG scenario that is shown in FIG. 5;
FIG. 16 is a flowchart that shows a processing flow during the execution of the ECG scenario;
FIG. 17 is an explanatory figure that shows a display screen in example 1 of the execution of the ECG scenario;
FIG. 18 is an explanatory figure that shows a display screen in example 1 of the execution of the ECG scenario;
FIG. 19 is a flowchart that shows a processing flow during execution of example 2 of the execution of the ECG scenario;
FIG. 20 is an explanatory figure that shows a display screen in example 2 of the execution of the ECG scenario;
FIG. 21 is an explanatory figure that shows a display screen in example 2 of the execution of the ECG scenario;
FIG. 22 is an explanatory figure that shows a display screen in example 2 of the execution of the ECG scenario;
FIG. 23 is an explanatory figure that shows a display screen in example 2 of the execution of the ECG scenario;
FIG. 24 is an explanatory figure that shows a display screen in example 2 of the execution of the ECG scenario;
FIG. 25 is an explanatory figure that shows a display screen in example 2 of the execution of the ECG scenario;
FIG. 26 is an explanatory figure that shows a display screen in example 3 of the execution of the ECG scenario;
FIG. 27 is an explanatory figure that shows a display screen in example 3 of the execution of the ECG scenario;
FIG. 28 is an explanatory figure that shows a display screen in example 3 of the execution of the ECG scenario;
FIG. 29 is an explanatory figure that shows a display screen in example 3 of the execution of the ECG scenario;
FIG. 30 is an explanatory figure that shows a display screen in example 3 of the execution of the ECG scenario; and
FIG. 31 is an explanatory figure that shows a display screen in example 3 of the execution of the ECG scenario.

### DETAILED DESCRIPTION OF THE PREFERRED EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### Configuration of an information providing system

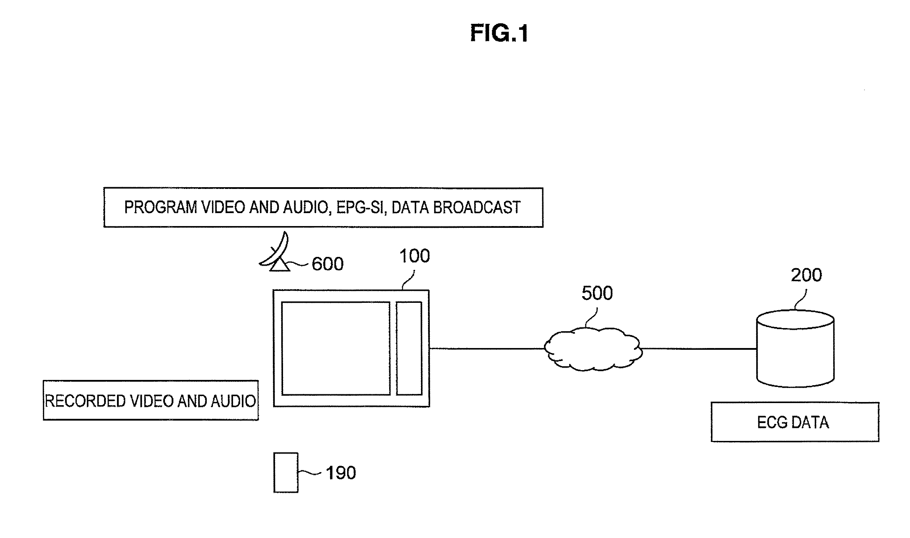

FIG. 1 is an explanatory figure that shows a conceptual configuration of an information providing system according to an embodiment of the present invention. As shown in FIG. 1, the information providing system includes a receiver terminal 100 (a receiving device) for a user and an Electronic Content Guide (ECG) service provider 200 (an information providing device) that is connected to the receiver terminal 100 through a communication network 500.

The receiver terminal 100 receives, through a receiving antenna 600, video and audio information for programs that are currently available for viewing, data broadcast information, and Electronic Program Guide - Service Information (EPG-SI) information, then provides the information to the user. In some cases, the receiver terminal 100 provides prerecorded video and audio information to the user. The receiver terminal 100 according to the present embodiment can also receive information for the programs that are currently available for viewing from the ECG service provider 200 to which it is connected through the communication network 500.

The ECG service provider 200 operates a system that has a storage portion storing various types of information, a communication portion communicating various types of information, and the like, and that provides information that pertains to programs to the user of the receiver terminal 100. The ECG service provider 200 controls registration of the information that pertains to the programs in the form of ECG data items and provides the ECG data items that pertain to the programs that are currently available for viewing to the user of the receiver terminal 100 by transmitting the ECG data items to the receiver terminal 100 through the communication network 500.

The user of the receiver terminal 100, by operating a remote control 190 or the like that is furnished with the receiver terminal 100, for example, can select which of the provided information, such as the video and audio information for the programs, the data broadcast information, the EPG-SI information, the ECG data, and the like, will be received through the communication network 500, the receiving antenna 600, or the like. In addition, with provision of an ECG service in an active state, video information items that pertain to the programs and ECG data items are individually displayed on the left side and the right side of a display screen of the receiver terminal 100.

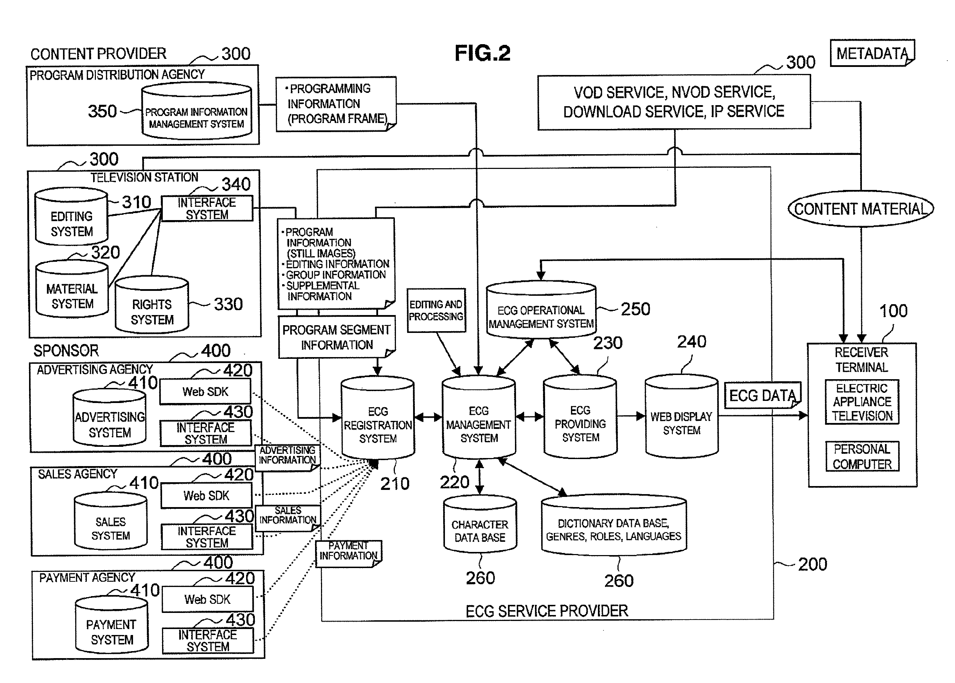

FIG. 2 is an explanatory figure that shows an example of a configuration model of the information providing system according to the present embodiment. As shown in FIG. 2, the information providing system includes a content provider 300, a sponsor 400, the receiver terminal 100, and the ECG service provider 200.

The content provider 300 is a content provider that provides information that pertains to programs along with the video and audio information for the programs, the data broadcast information, and the EPG-SI information. The content provider 300 may be, for example, a television station, a data broadcasting station, a program distribution agency, or the like. The information that pertains to programs includes information such as program information (including still image information), editing information, group information, supplemental information, program segment information, and the like (all of which information is hereinafter called "the program information").

The television station operates an editing system 310, a material system 320, a rights system 330, and the like that manage the program information that pertains to the programs. The data broadcasting station operates a program information manage system that manages the program information that pertains to programs that are provided by a video-on-demand (VOD) service, a near-video-on-demand (NVOD) service, a download service, an IP broadcast service, and the like. The program distribution agency operates a program information control system 350 that manages the program information (the programming information) that pertains to distributed programs. In addition to providing the video and audio information for the programs and the like to the user of the receiver terminal 100, the content provider 300 provides the program information that pertains to the programs, as well as detail information that will be described later, to the ECG service provider 200 through an interface system 340 or the like. The program information that is provided by the content provider 300 is provided to the user of the receiver terminal 100 through the ECG service provider 200.

The sponsor 400 may be, for example, an advertising agency, a sales agency, a payment agency, or the like that provides a service such as advertising, sales, payment collection or the like. In some cases, the sponsor 400 may be a content provider that provides the video and audio information for the programs. The sponsor 400 operates various types of information processing systems 410 according to the type of business, such as advertising, sales, payment, and the like, as well as a Web software development kit (SDK) 420, and an interface system 430.

The sponsor 400 provides, for example, such things as advertising information and sales information that introduce a product or service that an advertiser of the sponsor or the sponsor itself sells or provides. In a case where the sponsor 400 is a payment agency, the sponsor 400 provides payment information that is used in processing a product purchase based on the sales information. In a case where the sponsor 400 is a content provider, the sponsor 400 provides the program information that introduces the content, such as a program or the like that the sponsor 400 provides or distributes. The advertising information, sales information, payment information, program information, and the like that are provided by the sponsor 400 are provided to the user of the receiver terminal 100 through the ECG service provider 200 as service provision information that pertains to the programs.

The receiver terminal 100 receives the video and audio information for the programs from the content provider 300, as described above, and also receives from the ECG service provider 200 the ECG data, such as the program information and the service provision information that pertain to the programs, and the like.

### Configuration of the information providing device

The ECG service provider 200 (the information providing device) is operated by a service provider or the like that creates, manages, and provides the information that pertains to the programs in the form of the ECG data items. The ECG service provider 200 includes an ECG registration system 210, an ECG management system 220, an ECG providing system 230, a Web display system 240, an ECG operational management system 250, and various types of data bases 260.

The ECG registration system 210 registers the information that pertains to the programs (the program information, the service provision information, and the like) that is provided by the content provider 300 and the sponsor 400. The various data bases 260 include a character data base, a dictionary data base, and the like, for example, and store detail information that is related to the program information, such as the casts and genres of the programs, music and events that are related to the programs, and the like.

The ECG management system 220 manages the program information and the service provision information that are registered in the ECG registration system 210, as well as the detail information that is stored in the various data bases 260. The ECG management system 220 also carries out various types of editing and processing of the program information, the service provision information, and the detail information. In particular, by creating the information that pertains to the programs in the form of the ECG data items and then linking the ECG data items to one another and prioritizing the ECG data items, as described later, the ECG management system 220 edits a plurality of the ECG data items into the form of an ECG scenario.

By carrying out the editing and processing of the program information, the ECG management system 220 also creates, in the form of the ECG data items, program listing information that shows a plurality of the programs that are currently available for viewing. The program listing information that is created in the form of the ECG data items is not limited to the sort of content that is included in an electronic program listing information (EPG information). In addition to broadcast times and summaries of the programs, the program listing information can include information that is included in the program information, such as a still image and the like, for example. The program listing information is linked to the programs that are currently available for viewing and is updated in real time in response to program changes and the like.

The ECG providing system 230 provides to the user of the receiver terminal 100, through the Web display system 240, the ECG scenarios and the ECG data items for the program listing information that are managed by the ECG management system 220. The Web display system 240, in response to a request from the receiver terminal 100, provides to the receiver terminal 100, through the communication network 500, the ECG data items that are provided by the ECG providing system 230.

The ECG operational management system 250 manages the overall system operation of the ECG service provider 200 by controlling the ECG management system 220 and the ECG providing system 230.

In the ECG service provider 200, the ECG registration system 210, the ECG management system 220, and the various data bases 260, for example, function as related information storage portions, detail information linking portions, and the like. The ECG providing system 230 functions as a related information extraction portion, a detail information acquisition portion, and the like. The Web display portion 240 functions as a program listing information transmission portion, a related information transmission portion, a detail information transmission portion, a processing request receiving portion, and the like. The ECG operational management system 250 functions as a program designation information receiving portion, the processing request receiving portion, and the like. Note that the configuration of the ECG service provider 200 described above is only an illustrative example, and the ECG service provider 200 is not limited to this configuration.

### Configuration of the receiving device

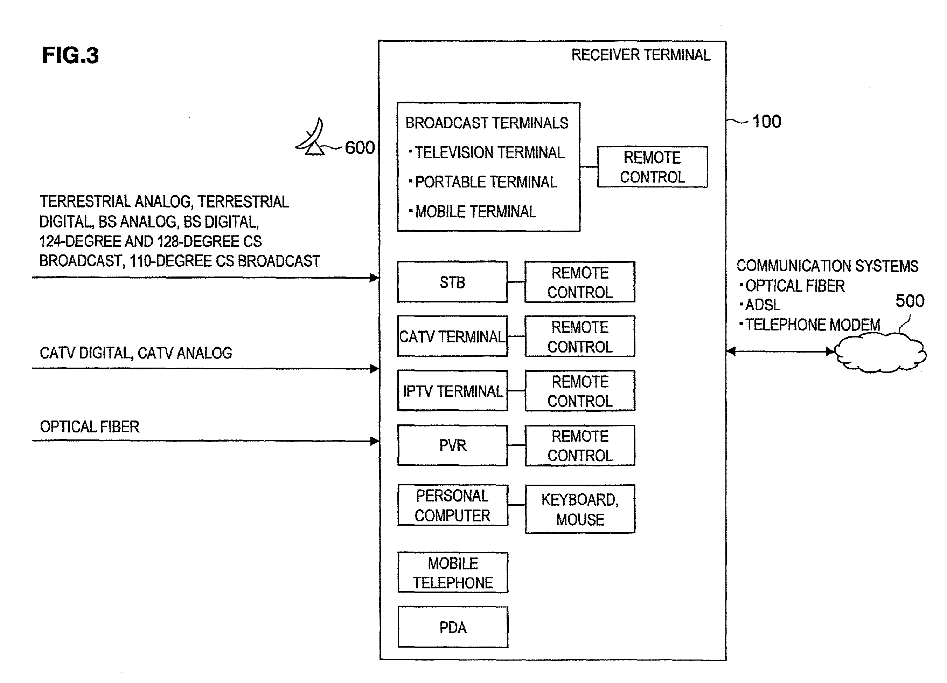

FIG. 3 is an explanatory figure that shows an example of a conceptual configuration of the receiver terminal 100 (the receiving device) that is included in the information providing system according to the present embodiment. As shown in FIG. 3, the receiver terminal 100 receives, through the receiving antenna 600, programs that are broadcast through various types of transmission routes, such as terrestrial analog broadcasting, terrestrial digital broadcasting, broadcast satellite (BS) analog broadcasting, BS digital broadcasting, 124-degree and 128-degree communication satellite (CS) broadcasting, 110-degree CS broadcasting, Common Antenna Television (CATV) digital broadcasting, CATV analog broadcasting, optical fiber broadcasting, and the like, for example.

The receiver terminal 100 may be, for example, a receiver terminal such as a television terminal, a portable terminal, a mobile terminal, or the like, a set-top box (STB), a CATV terminal, an Internet Protocol television (IPTV) terminal, a personal video recorder (PVR), a personal computer, a mobile telephone, a personal digital assistant (PDA), or the like. The receiver terminal 100 is capable of communication through the communication network 500, which may include optical fibers, asymmetric digital subscriber lines (ADSL), telephone modems, or the like.

The receiver terminal 100 can be operated by a remote control, a keyboard, a mouse and the like. The remote control 190 that is furnished with the receiver terminal 100 includes, for example, channel selection buttons for selecting the program channel to receive, up, down, left, and right buttons, an Enter button, and the like. By operating the channel selection buttons, the user of the receiver terminal 100 can directly select one of the programs that are currently available for viewing. The user can also select the desired program by operating the up, down, left, and right buttons, based on the program listing information that shows the plurality of the programs that are currently available for viewing. The user can then enter the selected program by operating the Enter button. Note that the up, down, left, and right buttons and the Enter button are operated in the same manner in order to select various types of information other than the program.

The remote control 190 also includes an EPG-SI information button, a data broadcast information button, an ECG service button, and the like. By operating the EPG-SI information button and the data broadcast information button, the user of the receiver terminal 100 can utilize the EPG-SI information and the data broadcast information that are provided by the content provider 300. By operating the ECG service button, the user can make requests to the ECG service provider 200 to start and terminate the provision of an ECG service.

An operation method that utilizes the remote control 190 has been explained, but operation methods that utilize a keyboard, a mouse, an operation portion of the receiver terminal 100 itself, and the like are substantially the same as the operation method that utilizes the remote control 190, so detailed explanations will be omitted.

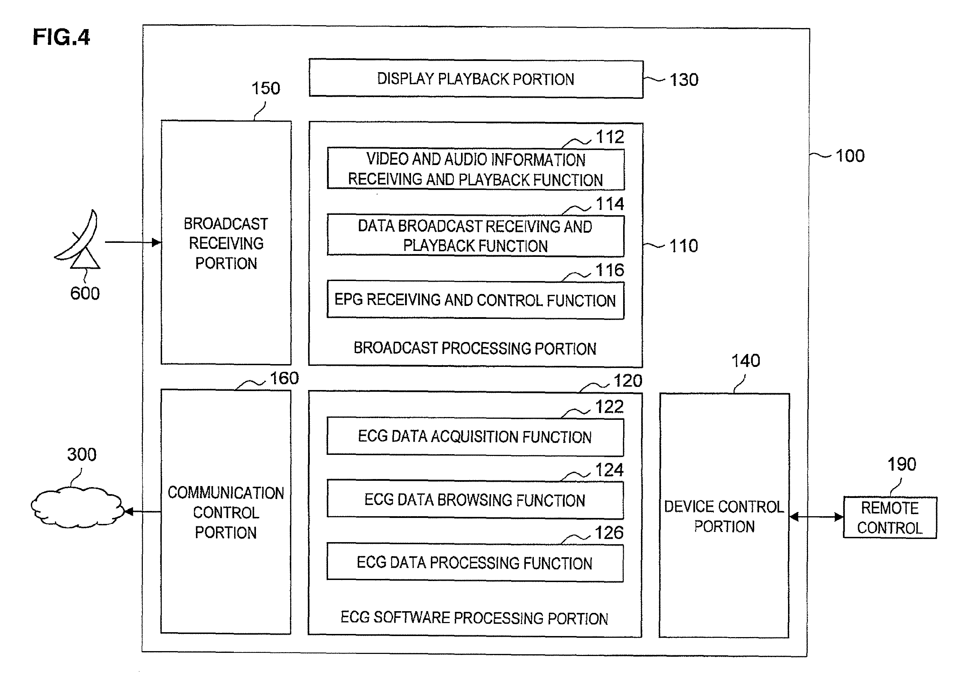

FIG. 4 is an explanatory figure that shows a conceptual functional configuration of the receiver terminal 100 according to the present embodiment. Each functional block of the receiver terminal 100 is controlled by a computer system that includes a CPU. A program that causes each functional block to function is stored in a storage portion that is included in the receiver terminal 100 and/or in a removable storage medium in the receiver terminal 100.

As shown in FIG. 4, the receiver terminal 100 includes a broadcast processing portion 110, an ECG software processing portion 120, a display playback portion 130, and a device control portion 140. The broadcast processing portion 110 has a video and audio information receiving and playback function 112, a data broadcast receiving and playback function 114, and an EPG receiving and control function 116. The ECG software processing portion 120 has an ECG data acquisition function 122, an ECG data browsing function 124, and an ECG data processing function 126.

In the receiver terminal 100, the ECG software processing portion 120, for example, uses the ECG data acquisition function 122 to operate in conjunction with a communication control portion 160, such that the ECG software processing portion 120 functions as a program listing information receiving portion, a program designation information transmission portion, a related information receiving portion, a processing request transmission portion, a detail information receiving portion and the like. The ECG software processing portion 120 uses the ECG data browsing function 124 and the ECG data processing function 126 to function as a related information processing portion and the like. The display playback portion 130 functions as a display control portion or the like that includes a video display portion, a program listing information display portion, and a related information display portion. In addition, the remote control 190 functions as a channel selection portion, a selecting and entering portion, and the like. Note that the configuration described above is only an illustrative example, and the configuration of the receiver terminal 100 is not limited by the configuration described above.

The broadcast processing portion 110 receives the video and audio information for the programs and the data broadcast information from the content provider 300 through a broadcast receiving portion 150. After performing any necessary processing, the broadcast processing portion 110 displays and plays back the video and audio information for the programs and the data broadcast information on the display playback portion 130. The broadcast processing portion 110 also receives the EPG information from the content provider 300 through the broadcast receiving portion 150 and performs any necessary control for displays, operations, and the like in connection with the EPG information. The ECG software processing portion 120 acquires from the ECG service provider 200 through the communication control portion 160 the information that pertains to the programs that are currently available for viewing in the form of the ECG data items. After performing any necessary processing, the ECG software processing portion 120 provides the ECG data items for browsing by the user by displaying and playing back the ECG data items on the display playback portion 130. The device control portion 140 controls the processing operations of the broadcast processing portion 110 and the ECG software processing portion 120 through the operation of the remote control 190 by the user.

### Configuration of the ECG scenario

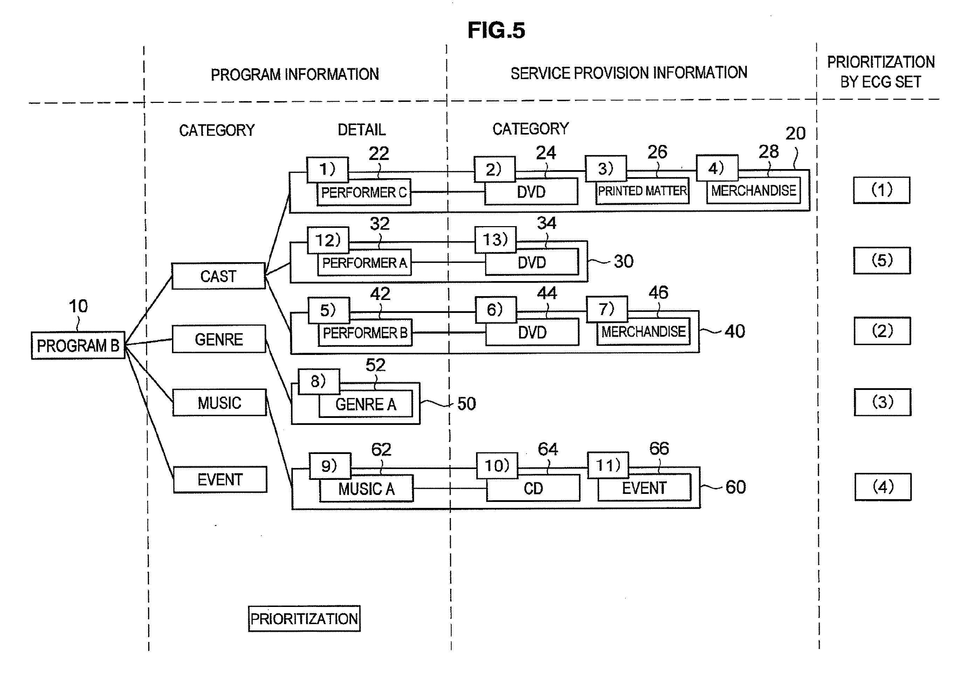

FIG. 5 is an explanatory figure that shows an example of a configuration of ECG data items that are included in the ECG scenario. As shown in FIG. 5, the ECG scenario includes the program information that pertains to the programs, the service provision information that pertains to the program information, and link information that links the programs, the program information, and the service provision information to one another. The ECG scenario is configured such that each program information item and the service provision information that is linked to the program information item are combined and bundled into an ECG set. Note that in some cases, the ECG set contains only the program information, without the accompanying service provision information. Note also that each of the ECG sets in the ECG scenario is individually prioritized, as is each of the service provision information items that are included in each of the ECG sets.

In the configuration of the ECG scenario that is shown in FIG. 5, the program information items "performer C" 22, "performer A" 32, "performer B" 42, "genre A" 52, and "music A" 62 that are linked to "program B" 10 are appropriately sorted into categories of cast, genre, and music. Further, the service provision information items "DVD" 24, "printed matter" 26, and "merchandise" 28 are linked to the program information item "performer C" 22, for example. Thus an ECG set 20 is formed from the program information item "performer C" 22 and the service provision information items "DVD" 24, "printed matter" 26, and "merchandise" 28. Further, an ECG scenario is formed that bundles ECG sets 20, 30, 40, 50, and 60 that respectively correspond to each of the program information items.

In this example, a prioritization has been carried out for the ECG sets 20, 30, 40, 50, and 60 that respectively correspond to the program information items "performer C" 22, "performer A" 32, "performer B" 42, "genre A" 52, and "music A" 62, such that the ECG sets 20, 30, 40, 50, and 60 have respectively been given the priorities (1), (5), (2), (3), and (4). A prioritization has also been carried out for the service provision information items according to the prioritization of the ECG sets. For example, a prioritization has been carried out that has respectively given the priorities 1), 2), 3), and 4) to the program information item "performer C" 22 and the service provision information items "DVD" 24, "printed matter" 26, and "merchandise" 28 that are linked to the program information item "performer C" 22. This means that when the ECG scenario is executed, the program information item "performer C" 22 will be displayed first, followed in order by displays of the service provision information items "DVD" 24, "printed matter" 26, and "merchandise" 28 that are linked to the program information item "performer C" 22, after which the program information item "performer B" 42 is displayed.

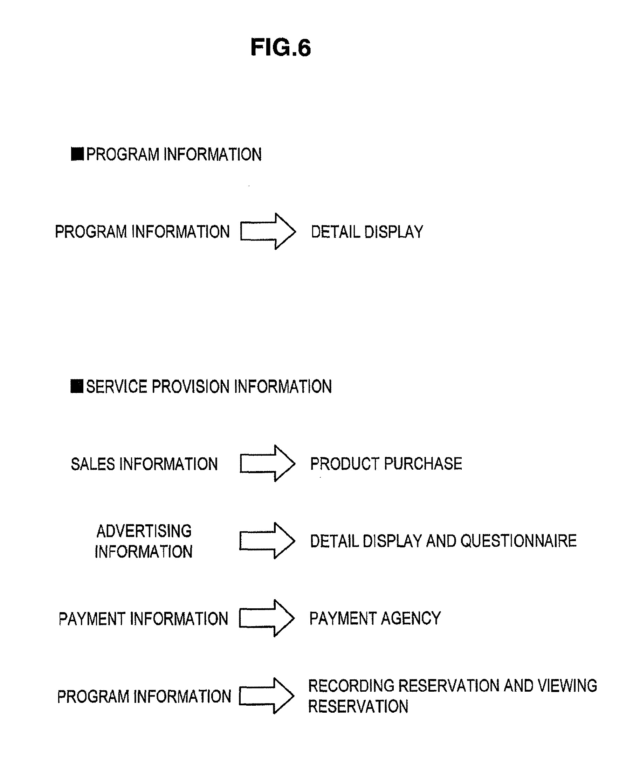

FIG. 6 is an explanatory figure that shows an example of a configuration of ancillary information that is related to the ECG scenario. In addition to including the program information items and the service provision information items, the ECG scenario, as shown in FIG. 6, is linked to detail information that pertains to the program information items and to detail information that pertains to the service provision information items. The detail information that pertains to the program information items may include, for example, detail information that pertains to the cast of a program, detail information that pertains to music or an event that is related to a program, or the like. The detail information that pertains to the service provision information items may include, for example, detail information that pertains to advertising information, information that pertains to a questionnaire, information that pertains to a product purchase that is related to sales information, information that pertains to a video recording reservation or a viewing reservation that is related to a program information item, or the like.

The detail information that pertains to the program information item is provided to the receiver terminal 100 by the ECG service provider 200 in response to a request that the user makes when the program information item is being displayed. The detail information that pertains to the service provision information item is provided to the receiver terminal 100 by the sponsor 400 through the ECG service provider 200 in response to a request that the user makes when the service provision information item is being displayed. The detail information that pertains to the service provision information item may include, for example, information that pertains to processing, such as a questionnaire, a product purchase, a reservation to record and view a program, and the like. Based on that information, a series of processes are carried out between the user of the receiver terminal 100 and the sponsor 400.

### Metadata for the ECG scenario

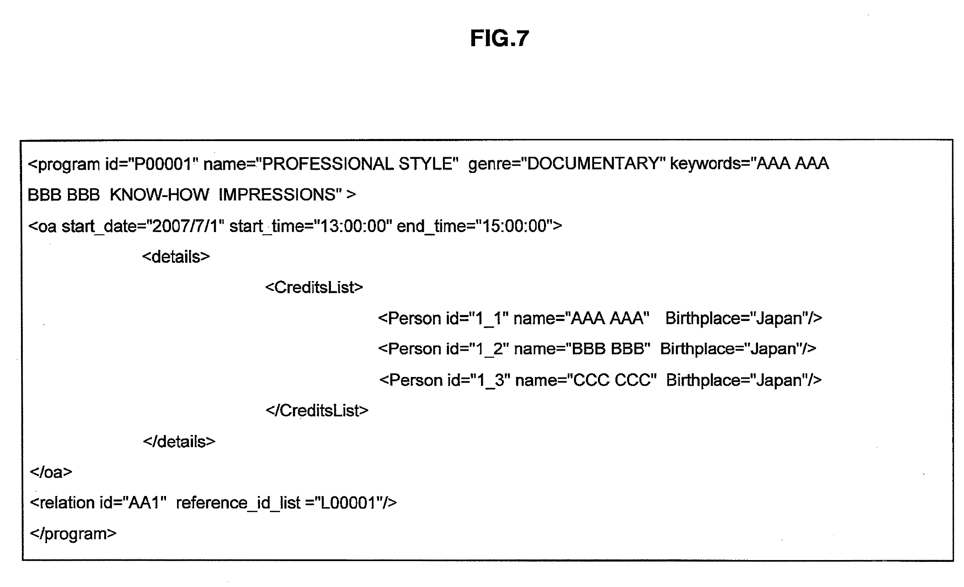

FIGS. 7 to 10 are explanatory figures that show examples of ECG data items in a metadata format that are included in the ECG scenario. FIGS. 7 to 10 show examples of metadata records that respectively pertain to a program information item, to a service provision information item, and to a link information item that links a program, a program information item, and a service provision information item to one another, as well as metadata records that pertain to an ECG set and to an ECG scenario.

The metadata record that is shown in FIG. 7 pertains to the program information item and defines information on the genre, keywords, cast, and the like for the program.

The metadata record that is shown in FIG. 7 defines "P00001" as the program ID, "Professional Style" as the program name, "documentary" as the genre, and "AAA AAA", "BBB BBB", "know-how", and "impressions" as the keywords. The metadata record also respectively defines "2007/7/1", "13:00:00", and "15:00:00" as the starting date, the starting time, and the ending time for the program. The three-person cast that performs in the program is also defined. The cast member with the person ID "1_1" is defined as having the name "AAA AAA" and the birthplace "Japan". The names and birthplaces of the cast members with the person IDs "1_2" and "1_3" are defined in the same manner. "AA1" is defined as the relation ID for the metadata record, and "L00001" is defined as the reference ID list for the link information for the program.

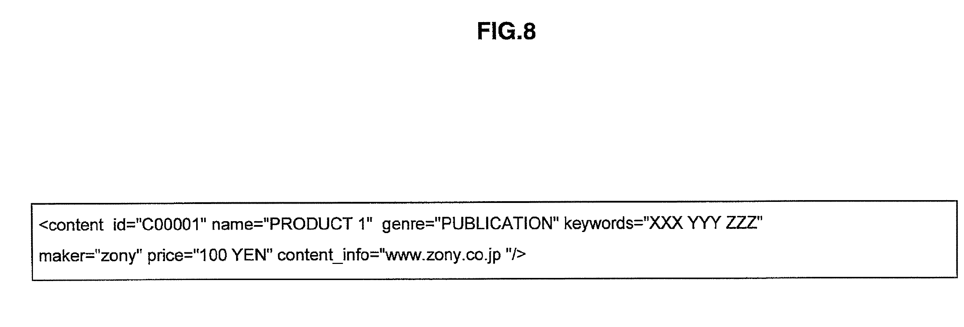

The metadata record that is shown in FIG. 8 pertains to the service provision information item and defines information on the genre, keywords, maker, retail price, place to obtain the detail information, and the like for the service provision information item.

The metadata record that is shown in FIG. 8 defines "C00001" as the service provision information item ID (content ID), "product 1" as the service provision information item name, "publication" as the genre, "XXX", "YYY", and "ZZZ" as the keywords, "zony" as the maker, "100 yen" as the retail price, and "www.zony.co.jp" as the place to obtain the detail information.

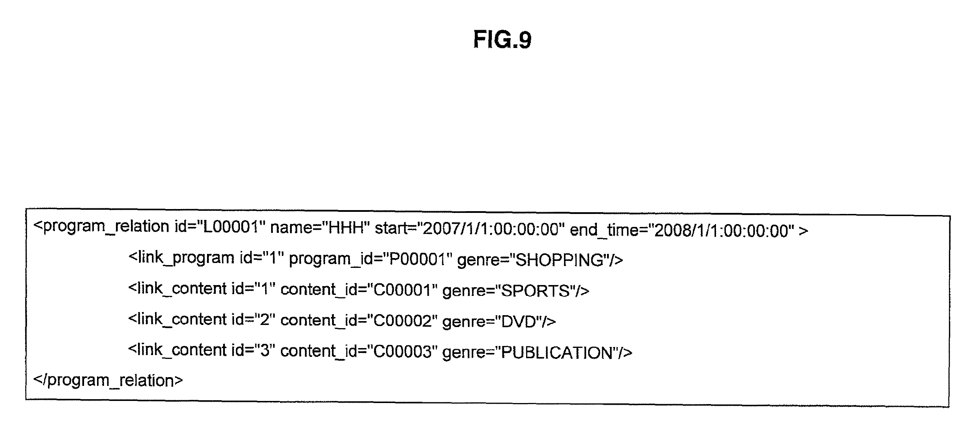

The metadata record that is shown in FIG. 9 pertains to the link information item that links the program, the program information item, and the service provision information item to one another. The metadata record defines information on the genres and the like for the program information item and the service provision information items that will be linked to the program.

The metadata record that is shown in FIG. 9 defines "L00001" as the program relation ID, "HHH" as the program relation name, and "2007/1/1", "00:00:00", "2008/1/1", and "00:00:00", respectively, as the starting date, the starting time, the ending date, and the ending time. The metadata record also defines "1" as the linked program ID, "P00001" as the program ID, and "shopping" as the genre. Three linked service provision information items are also defined. For the service provision information item with the linked service provision information item ID "1", the service provision information item ID (content ID) is defined as "C00001", and the genre is defined as "sports". Note that the service provision information item IDs and the genres are defined in the same manner for the service provision information items with the linked service provision information item IDs "2" and "3".

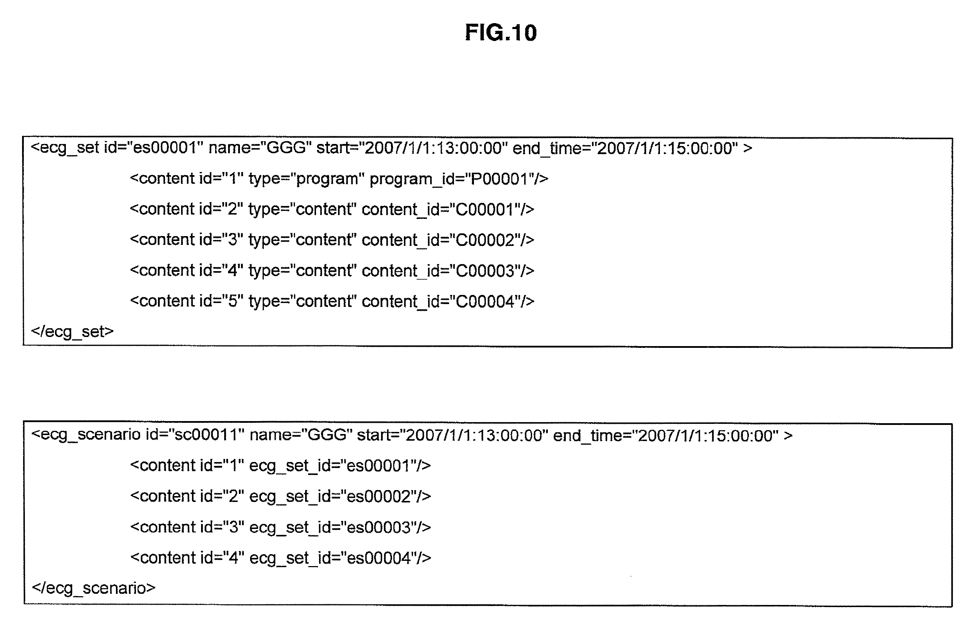

The metadata record shown in FIG. 10 that pertains to the ECG set defines information such as the program information item and the service provision information items that form the ECG set.

The metadata record shown in FIG. 10 that pertains to the ECG set defines "es00001" as the ECG set ID, "GGG" as the ECG set name, and "2007/1/1", "13:00:00", "2007/1/1", and "15:00:00", respectively, as the starting date, the starting time, the ending date, and the ending time. Five items that form the ECG set are also defined. For the item with the item ID (content ID) "1", the type is defined as "program", and the program ID is defined as "P00001". For the items with the item IDs (content ID ··) "2" to "5", the type is defined as "service provision information", and the service provision information item IDs are respectively defined as "C00001" to "C00005".

The metadata record shown in FIG. 10 that pertains to the ECG scenario defines information on the ECG sets that form the ECG scenario.

The metadata record shown in FIG. 10 that pertains to the ECG scenario defines "sc00001" as the ECG scenario ID, "GGG" as the ECG scenario name, and "2007/1/1", "13:00:00", "2007/1/1", and "15:00:00", respectively, as the starting date, the starting time, the ending date, and the ending time. Four ECG sets that form the ECG scenario are also defined. For the items with the item IDs "1" to "4", the ECG set IDs are respectively defined as "es00001" to "es00004".

### Processing flow for the ECG scenario

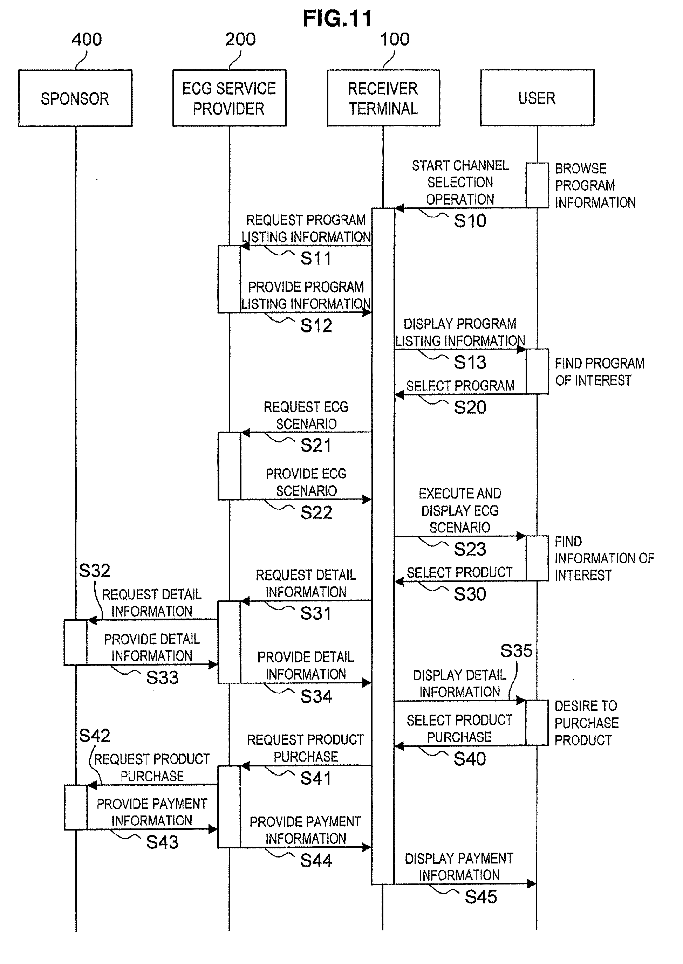

FIG. 11 is a sequence chart that shows an example of a processing flow for the ECG scenario in the entire information providing system according to the present embodiment. The processing flow for the ECG scenario in the entire information providing system will be explained below with reference to FIG. 11.

To change the program that is currently being viewed, the user of the receiver terminal 100 uses the remote control 190 to start the channel selection operation by operating the ECG service button or the like in order to browse the program listing information for the programs that are currently available for viewing (step S10). Once the channel selection operation is started, the receiver terminal 100 makes a request to the ECG service provider 200 to provide the program listing information for the programs that are currently available for viewing (step S11). In response to the program listing information request, the ECG service provider 200 provides to the receiver terminal 100 the program listing information that is created based on the program information that was acquired from the content provider 300 (step S12). The receiver terminal 100 provides the program listing information to the user by displaying the provided program listing information (step S13).

Once the program listing information is provided, the user selects (enters) a program by operating the remote control 190 based on the program listing information (step S20). Once the program has been selected (entered), the receiver terminal 100 makes a request to the ECG service provider 200 to provide the ECG scenario that is linked to the program that was selected (entered) by operating the remote control 190, as well as information that designates the selected program (step S21). Note that a case has been explained here in which the program is selected (entered) based on the program listing information, but the same sort of processing is performed in a case where the channel is selected directly by using the channel selection buttons or the like on the remote control 190. In response to the request for the ECG scenario, the ECG service provider 200 extracts the ECG scenario for the program based on the program designation information and provides the extracted ECG scenario to the receiver terminal 100 (step S22). The receiver terminal 100 executes the provided ECG scenario and provides the program information and the service provision information to the user by displaying the information in order (step S23).

If the user finds information that is of interest among the program information and the service provision information that are displayed in order based on the ECG scenario, the user operates the remote control 190 to select, for example, a service provision information item about a product that the sponsor 400 sells (step S30). Once the service provision information item is selected, the receiver terminal 100 makes a request to the ECG service provider 200 to provide the detail information that pertains to the product (the service provision information item) that was selected by the operating of the remote control 190 (step S31). In response to the request for the detail information, the ECG service provider 200 makes a request to the sponsor 400 to provide the detail information (step S32), acquires the detail information from the sponsor 400 (step S33), and provides the acquired detail information to the receiver terminal 100 (step S34). The receiver terminal 100 provides to the user the detail information that pertains to the product by displaying the provided detail information (step S35).

In a case where the user wants to purchase the product, the user selects the purchase of the product by operating the remote control 190 (step S40). Once the product purchase has been selected, the receiver terminal 100 makes a request to the ECG service provider 200 to process the product purchase (the service provision information item) (step S41). In response to the request to process the product purchase, the ECG service provider 200 makes a request to the sponsor 400 that is the payment agency to provide the payment information (step S42), acquires the payment information from the sponsor 400 (step S43), and provides the acquired payment information to the receiver terminal 100 (step S44). The receiver terminal 100 transmits and receives to and from the sponsor 400 the payment information that pertains to the product purchase and information that pertains to the user's response to the payment information (steps S41 to S44). Thus the processing of the product purchase is carried out between the user of the receiver terminal 100 and the sponsor 400 through the ECG service provider 200 (steps S40, S45).

### Starting the ECG scenario

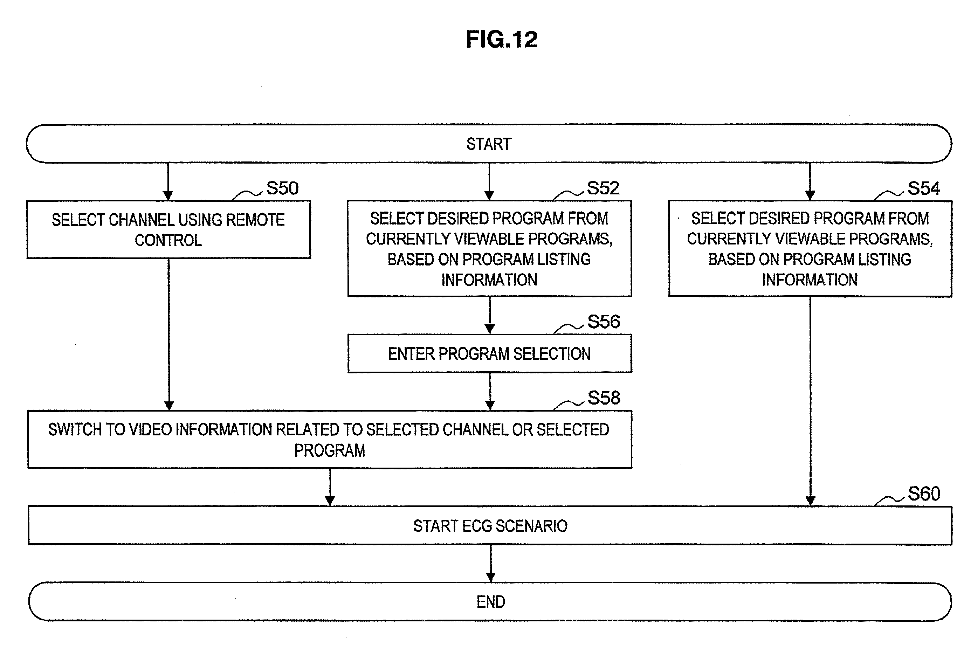

FIG. 12 is a flowchart that shows a processing flow for starting the ECG scenario according to the present embodiment. The processing flow for starting the ECG scenario will be explained below with reference to FIG. 12. The ECG scenario starts, for example, when the user of the receiver terminal 100 performs the operations described below on the remote control 190.

In a first start pattern, if the user operates the remote control 190 to select a channel when the provision of the ECG service is in the active state (step S50), video information that is displayed on the display screen of the receiver terminal 100 switches to video information that corresponds to the program that is currently being broadcast on the selected channel (step S58). Then the ECG scenario that is linked to the program that is currently being broadcast on the selected channel is acquired from the ECG service provider 200, and the acquired ECG scenario is started (step S60).

In a second start pattern, if, based on the program listing information that was acquired from the ECG service provider 200, the user operates the remote control 190 to select a program that is currently available for viewing (step S52) and enters the selection (step S56), the video information display is switched (step S58), and the ECG scenario that is linked to the program that is currently being broadcast on the selected channel is started (step S60).

In a third start pattern, if, based on the program listing information that was acquired from the ECG service provider 200, the user operates the remote control 190 to select a program that is currently available for viewing (step S54), the ECG scenario that is linked to the program that is currently being broadcast on the selected channel is started (step S60), without any switching of the video information display being performed.

That is, in the first and second start patterns, the video information for the program that is currently being viewed is displayed, and the ECG scenario that is linked to the program is started. On the other hand, in the third start pattern, the ECG scenario that is linked to a different program from the program that is currently being viewed is started.

### Execution of the ECG scenario

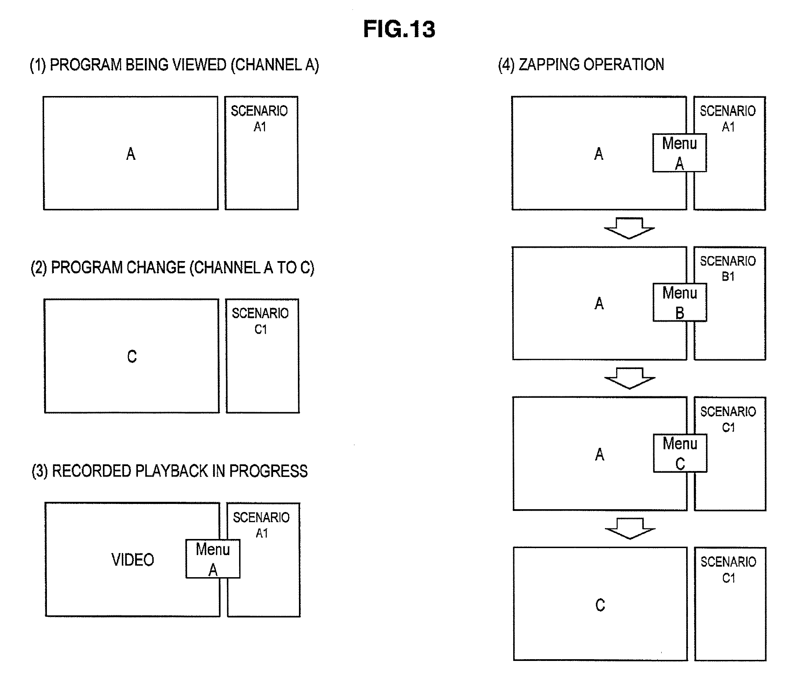

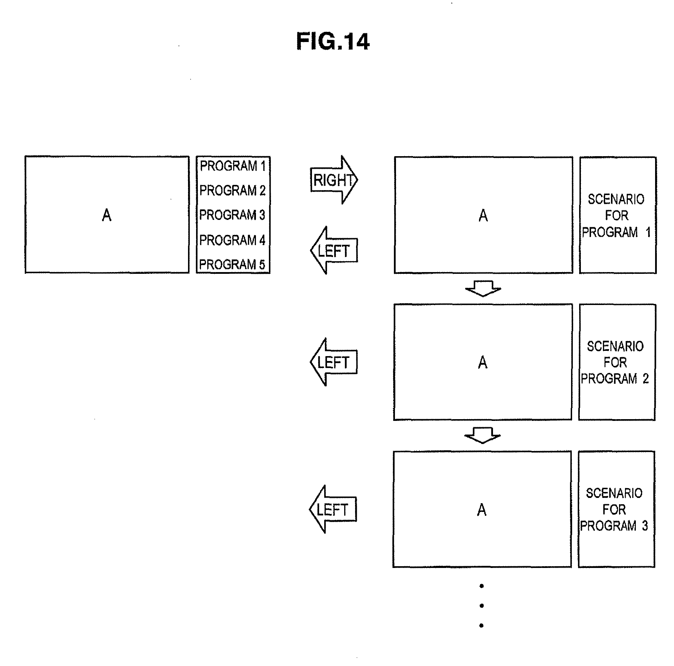

FIGS. 13 and 14 are explanatory figures that show display patterns of screens that are displayed during the execution of the ECG scenario according to the present embodiment. FIGS. 13 and 14 schematically show the display patterns for (1) a case where the ECG scenario that is linked to the program that is currently being viewed is executed, (2) a case where the ECG scenario that is linked to a program on a channel to which the user has changed is executed, and (3) a case where the ECG scenario that is linked to a different program from the (recorded and played back) program that is currently being viewed is executed. Also schematically shown are display patterns for (4) a case where the channel is switched based on the program listing information and (5) a case where the execution of the ECG scenario is switched based on the program listing information.

Note that in the display patterns that are shown in FIGS. 13 and 14, as well as in display patterns that are shown in other figures that are described below, display areas for the video information and the ECG scenario are provided on one of the left side and the right side of the display screen. This allows the program listing information and the ECG scenario to be displayed without being superimposed on the display of the video information for the program, so the user can browse the information that pertains to the programs that are currently available for viewing in a form that is easy to read and can watch the video information for the program at the same time. Note that the arrangement of the display areas that is shown in the figures is only an illustrative example, and the arrangement of the display areas is not limited to this example.

In the display pattern (1), video information for a program A that is currently being viewed is displayed, and an ECG scenario A1 that is linked to the program A is being executed. In the display pattern (2), video information for a program C on a channel to which the user has changed is displayed, and an ECG scenario C 1 that is linked to the program C is being executed.

In the display pattern (3), video information for a (recorded and played back) program that is currently being viewed is displayed, and an ECG menu A is also displayed. The ECG menu is menu information that appears in response to an operation of the remote control 190 by the user. The ECG menu may include, for example, the program listing information for the programs that are currently available for viewing and operating information for the ECG scenario, such that the ECG menu prompts the user to make a selection from the provided information. If, for example, the user selects the program A from the ECG menu A, the ECG scenario A1 that is linked to the program A is executed.

In the display pattern (4), first, the video information for the program A that is currently being viewed is displayed, and the ECG scenario A1 that is linked to the program A is being executed. The ECG menu A is being displayed, and if the user selects a program B from the ECG menu A, an ECG scenario B 1 that is linked to the program B will be executed and the ECG menu A will switch to an ECG menu B. If the user selects the program C from the ECG menu B, the ECG scenario C 1 that is linked to the program C will be executed and the ECG menu B will switch to an ECG menu C. Then if the user enters the selection of the program C, the display of the video information for the program A that is currently being viewed will switch to the display of the video information for the program C.

In the display pattern (5), first, with the provision of the ECG service in the active state, the video information for the program A that is currently being viewed is displayed, and the program listing information for programs 1 to 5 is displayed in the form of a list. In this state, if the remote control 190 is not operated for a specified period of time, the video information for the program A that is currently being viewed is displayed, and the ECG scenarios that are linked to the programs 1 to 5 are executed in order. The user can also switch the displays of the program listing information and the ECG scenarios by operating the left and right buttons on the remote control 190, for example.

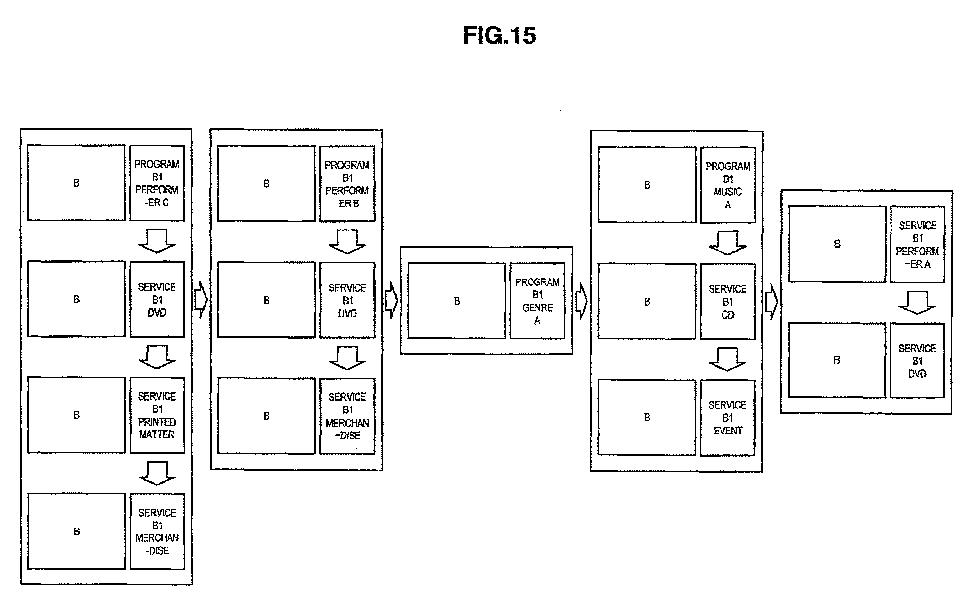

FIG. 15 is an explanatory figure that shows a display pattern of screens that are displayed during the execution of the ECG scenario that is shown in FIG. 5. As shown in FIG. 15, when the ECG scenario is executed, the program information items and the service provision information items that make up the ECG scenario are displayed in order by the ECG set in accordance with the priority that is assigned to each individual item.

In the display pattern that is shown in FIG. 15, first, the video information for "program B" 10 that is currently being viewed is displayed, and the ECG scenario that is linked to "program B" 10 is being executed. In the execution of the ECG scenario, the ECG sets 20, 40, 50, 60, and 30 that respectively correspond to the program information items "performer C" 22, "performer B" 42, "genre A" 52, "music A" 62, and "performer A" 32 are displayed in order by the ECG set in accordance with their assigned priorities. When each ECG set is displayed, the program information item is followed in order by the service provision information items that are linked to it. For example, the program information item "performer C" 22 is followed in order by the service provision information items "DVD" 24, "printed matter" 26, and "merchandise" 28. In the ECG scenario that is linked to "program B" 10, when the display ends for the ECG set 20 (corresponding to the program information item "performer C" 22), which is assigned the priority (1), the display starts for the ECG set 40 (corresponding to the program information item "performer B" 42), which is assigned the priority (2).

When the program information items and the service provision information items are displayed, display processing such as color coding of the ECG scenario display area or the like may be carried out according to, for example, a category of the program information item and/or a category of the service provision information items. This allows the user of the receiver terminal 100 to efficiently browse the information that pertains to the programs. The content provider 300 and the sponsor 400 can also efficiently provide to the user the information that pertains to the programs.

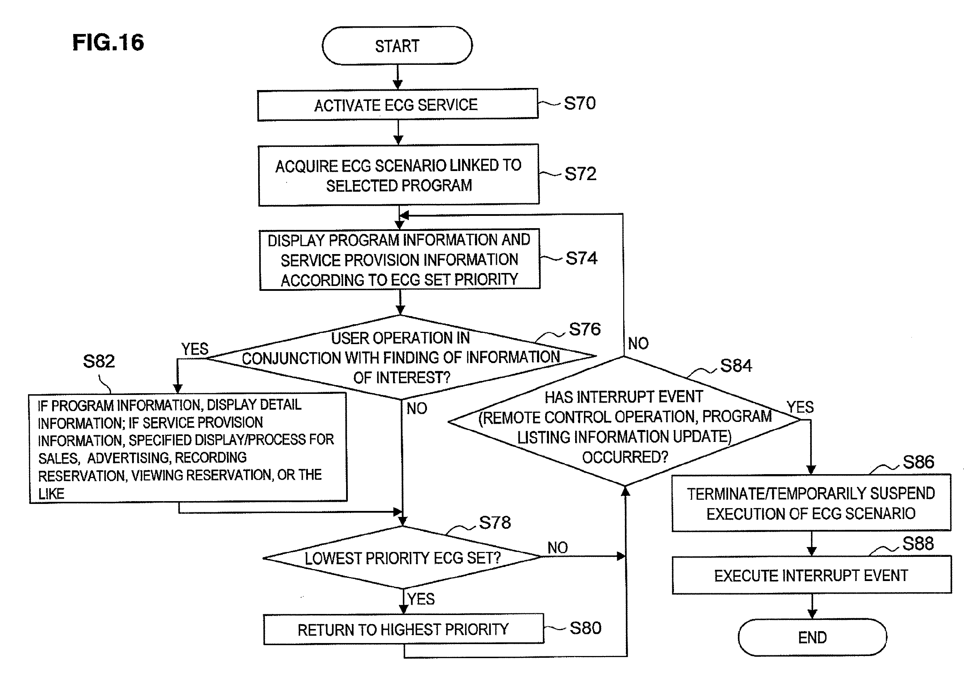

FIG. 16 is a flowchart that shows a processing flow during the execution of the ECG scenario according to the present embodiment. The processing flow during the execution of the ECG scenario will be explained below with reference to FIG. 16.

Before the ECG scenario is executed, the provision of the ECG service is activated through an operation by the user of the receiver terminal 100 (step S70). Once the provision of the ECG service is activated, the ECG scenario that is linked to the program that was selected or whose channel was selected by an operation of the remote control 190 is acquired from the ECG service provider 200 (step S72). Once the ECG scenario is acquired, the program information items and the service provision information items that make up the ECG scenario are displayed in order by the ECG set in accordance with the priority that is assigned to each individual item (step S74). Then, when all of the program information items and the service provision information items that make up the ECG scenario have been displayed (step S78), the display of the ECG scenario is repeated in accordance with the prioritization (step S80).

If the user finds information that is of interest among the displayed program information items and service provision information items, the user performs the entering operation on the remote control 190 (step S76). Once the entering operation is performed, the detail information is displayed that pertains to the one of the program information item and the service provision information item that was being displayed at the time when the entering operation was performed, and the processing is performed to provide the various types of services that are related to the service provision information item that was being displayed (step S82).

Because this allows the program information items and the service provision information items that make up the ECG scenario to be displayed in order, the user can easily browse the information that pertains to the programs that are currently available for viewing. At the same time, through the ECG service provider 200, the content provider 300 and the sponsor 400 can effectively provide the information that prompts the user to select a program and to utilize the various types of services.

Furthermore, because the program information items and the service provision information items that are included in the ECG scenario are displayed in order by the ECG set in accordance with the prioritization, the user can efficiently browse the information that pertains to the programs that are currently available for viewing. At the same time, through the ECG service provider 200, the content provider 300 and the sponsor 400 can effectively provide, in accordance with the prioritization, the information that prompts the user to select a program and to utilize the various types of services. This can be done, for example, by considering the advertising effects and the like that are achieved by the advertising characteristics and the display sequencing of each of the information items.

Moreover, even if no channel selection operation or selection entering operation is performed on the remote control 190, the information items that are included in the ECG scenarios that respectively pertain to the plurality of the programs that are included in the program listing information are displayed in order, so the user can easily browse the information that pertains to the programs that are currently available for viewing.

Further, because the information for executing the processing that is necessary for providing the services is linked to the service provision information, the sponsor 400 can effectively prompt the user to utilize the various types of services, based on the service provision information.

Note that if an interrupt event, such as an operation of the remote control 190 that is unrelated to the execution of the ECG scenario, an update or change to the program listing information, or the like, occurs while the ECG scenario is being executed (step S84), the execution of the ECG scenario is one of terminated and temporarily suspended (step S86), and the interrupt event is executed (step S88).

Because this allows the detail information to be displayed that pertains to the program information items and the service provision information items, the user can easily browse the detail information that pertains to the programs that are currently available for viewing. At the same time, through the ECG service provider 200, the content provider 300 and the sponsor 400 can effectively provide the detail information that prompts the user to select a program and to utilize the various types of services.

As explained above, according to the present embodiment, the ECG scenario (related information) is provided through one of a channel selection operation, a program selection operation, and an entering operation, so by performing a simple operation, the user can reliably browse the information that pertains to the programs that are currently available for viewing. Further, because the plurality of the information items that are included in the ECG scenario, such as the program information items, the service provision information items, and the like, are displayed in order, the user can effectively browse the information that pertains to the programs in a form that is easy to read. At the same time, because the ECG scenario is edited such that the plurality of the information items that pertain to the program are displayed in order, the content provider 300 and the sponsor 400 can, through the ECG service provider 200 (the information providing device), effectively provide to the user, in a form that is easy to read, the information that pertains to the programs that are currently available for viewing.

### Examples of the execution of the ECG scenario

Specific examples 1 to 3 of the execution of the ECG scenario will be explained below.

### Execution example 1

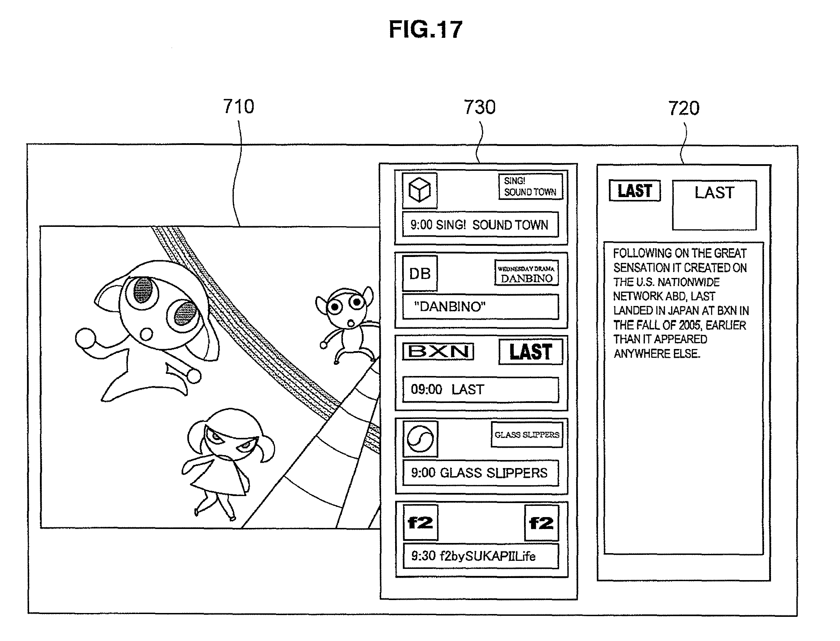

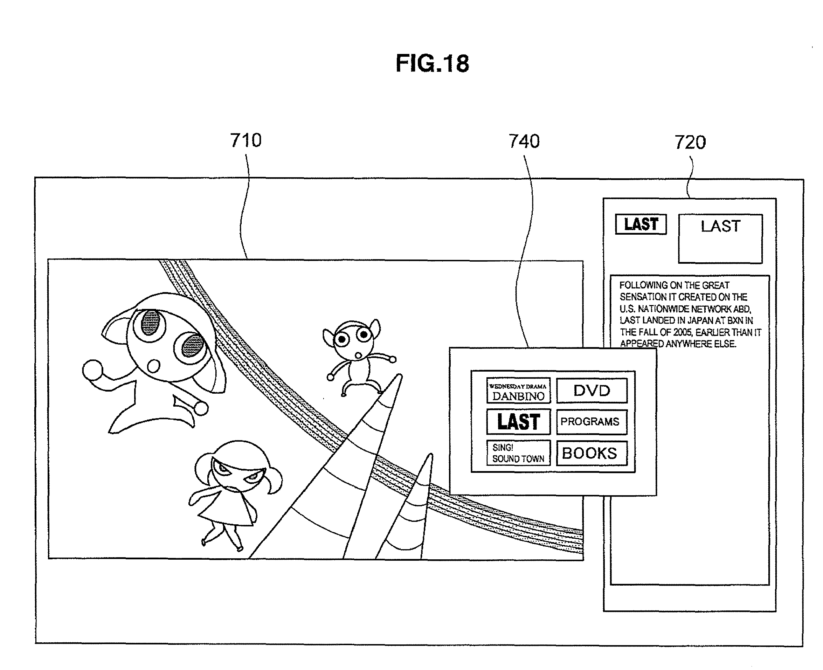

FIGS. 17 and 18 are explanatory figures that show display screens in example 1 of the execution of the ECG scenario. In execution example 1, as shown in FIGS. 17 and 18, video information 710 for the program that is currently being viewed is displayed on the left side of the display screen, and a program information item 720 that is included in the ECG scenario is displayed on the right side of the display screen. In this case, the program information item 720 includes information such as the title "Last", a logo, a summary, and the like for a program that is currently available for viewing and that is different from the program that is currently being viewed.

On the display screen that is shown in FIG. 17, program listing information 730 is listed on the right side of the central portion of the display screen, with program information being displayed for five programs that are currently available for viewing. The program information in the program listing information 730 includes logos for the content providers, logos for the programs, program titles, and planned broadcast start times.

By operating the remote control 190, the user of the receiver terminal 100 can select a desired program on the display screen that is shown in FIG. 17, based on the program listing information 730. If the user selects any program based on the program listing information 730, the display screen for the ECG scenario switches to a display of program information that pertains to the selected program. If the user, having selected the program, enters the selection, the display screen for the video information 710 for the program switches to a display of video information for the selected program. On the other hand, if the remote control 190 is not operated for a specified period of time, the ECG scenarios for the programs that are listed in the program listing information 730 are displayed in order, and the program information items and the service provision information items that are included in the ECG scenarios are displayed in order.

In contrast to the display screen that is shown in FIG. 17, the display screen that is shown in FIG. 18 displays an ECG menu 740 on the right side of the central portion of the display screen. The ECG menu 740 displays program information for three programs that are currently available for viewing, along with ECG scenario operation information. The program information in the ECG menu 740 includes program logos, and service provision information includes service provision information categories (DVD, program, printed matter).

By operating the remote control 190, the user of the receiver terminal 100 can select one of a desired program and category on the display screen that is shown in FIG. 18, based on the ECG menu 740. If the user selects and enters any program based on the ECG menu 740, the displays on the display screen for the ECG scenario 720 and the display screen for the video information 710 for the program are switched in the same manner as on the display screen that is shown in FIG. 17. If the user selects any category, the display on the display screen for the ECG scenario 720 switches to the service provision information that pertains to the selected category.

### Execution example 2

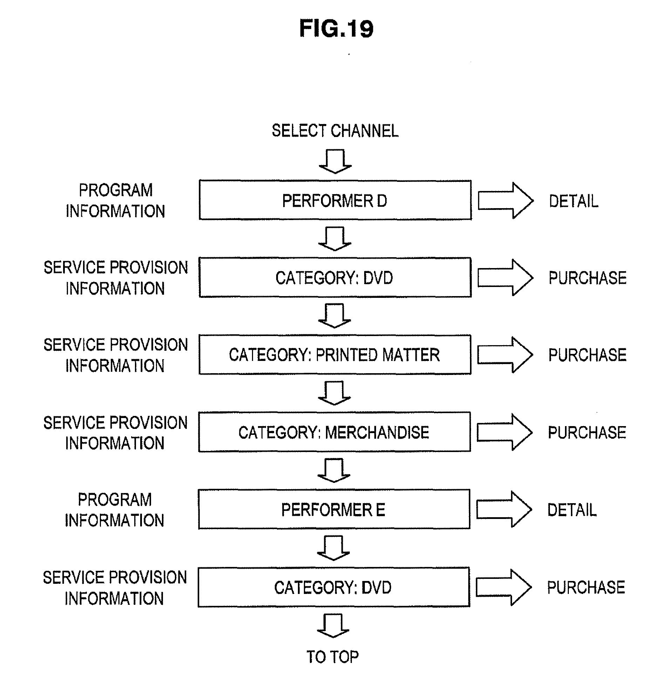

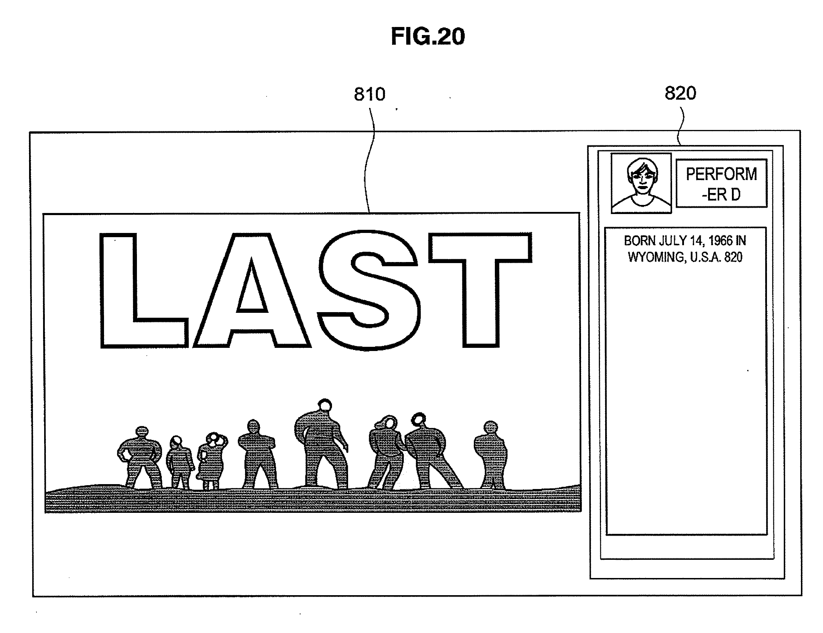

FIG. 19 is a flowchart that shows a processing flow during execution of example 2 of the execution of the ECG scenario. FIGS. 20 to 25 are explanatory figures that show display screens in example 2 of the execution of the ECG scenario. The display screens in execution example 2 will be explained below in accordance with the processing flow that is shown in FIG. 19.

In execution example 2, as shown in FIG. 19, the ECG scenario is started by a channel selection for a program. After information items (1) to (6) that pertain to the program are displayed in order as shown below, the display of the ECG scenario is repeated. The information items that pertain to the program include (1) a first program information item, (2) a first service provision information item that pertains to the first program information item, (3) a second service provision information item that pertains to the first program information item, (4) a third service provision information item that pertains to the first program information item, (5) a second program information item, and (6) a first service provision information item that pertains to the second program information item.

In execution example 2, as shown in FIGS. 20 to 25, video information 810 for the program that is currently being viewed is displayed on the left side of the display screen, and information items that pertain to the program and are included in the ECG scenario are displayed on the right side of the display screen. In this case, the ECG scenario information item that is displayed pertains to the program that is currently being viewed.

A name, "performer D", a photograph, and a brief biography for a cast member A are displayed on the display screen that is shown in FIG. 20 as the first program information item 820 that is included in the ECG scenario. If the user performs the entering operation on the remote control 190 with the display screen in this state, detail information for the cast member A will be provided by the ECG service provider 200 and displayed.

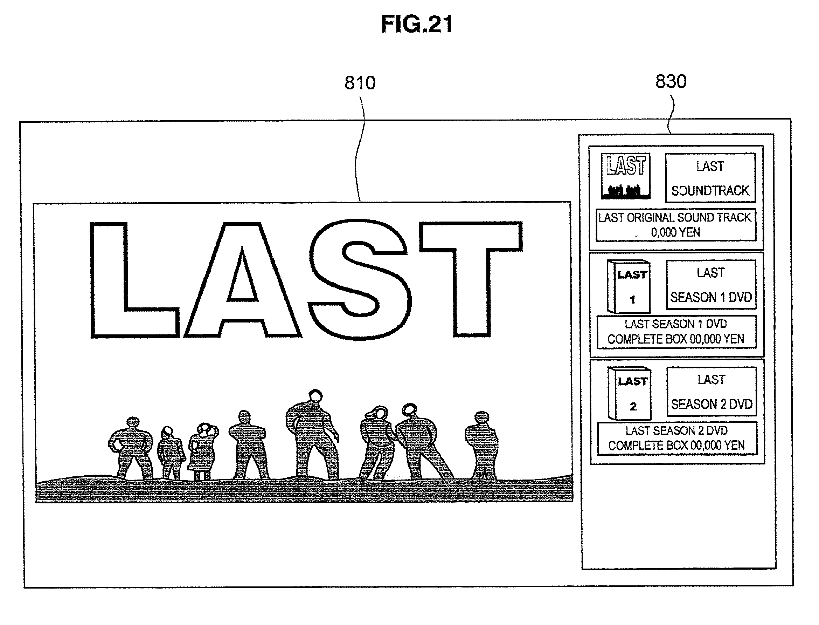

Service provision information for three DVDs is displayed on the display screen that is shown in FIG. 21 as the first service provision information item 830 that pertains to the first program information item (the cast member A) that is included in the ECG scenario. The service provision information item 830 includes product names, images, details, and retail prices. If the user, having operated the remote control 190 to select a product, performs the entering operation with the display screen in this state, detail information that pertains to the service provision information for the selected product will be provided by the sponsor 400 through the ECG service provider 200 and displayed. Then, after the detail information is displayed, specified product purchase processing will be carried out between the user of the receiver terminal 100 and the sponsor 400.

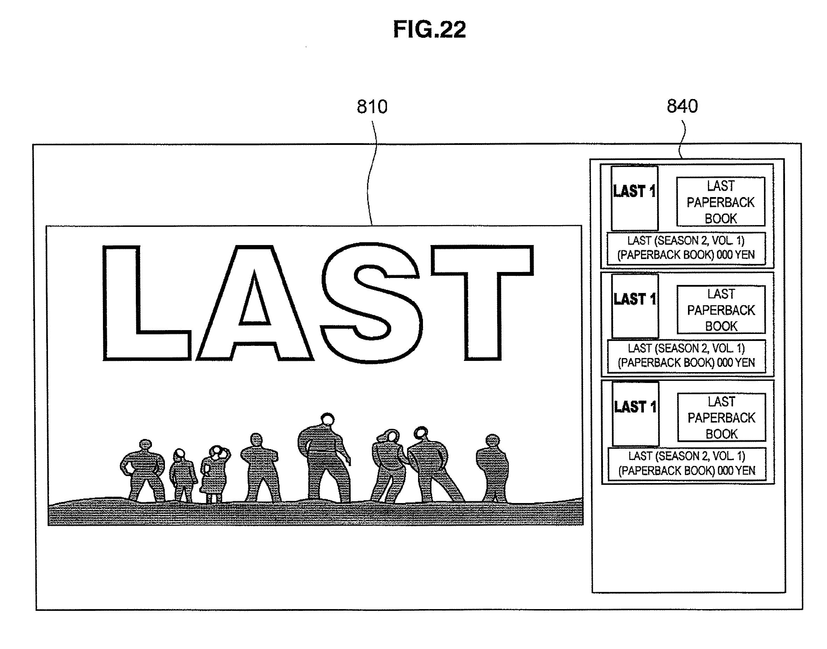

Service provision information for three books is displayed on the display screen that is shown in FIG. 22 as the second service provision information item 840 that pertains to the first program information item (the cast member A) that is included in the ECG scenario. The service provision information item 840 includes product names, images, details, and retail prices. The display of the detail information and the product purchase processing are the same as in the case of the display screen that is shown in FIG. 21, so an explanation will be omitted.

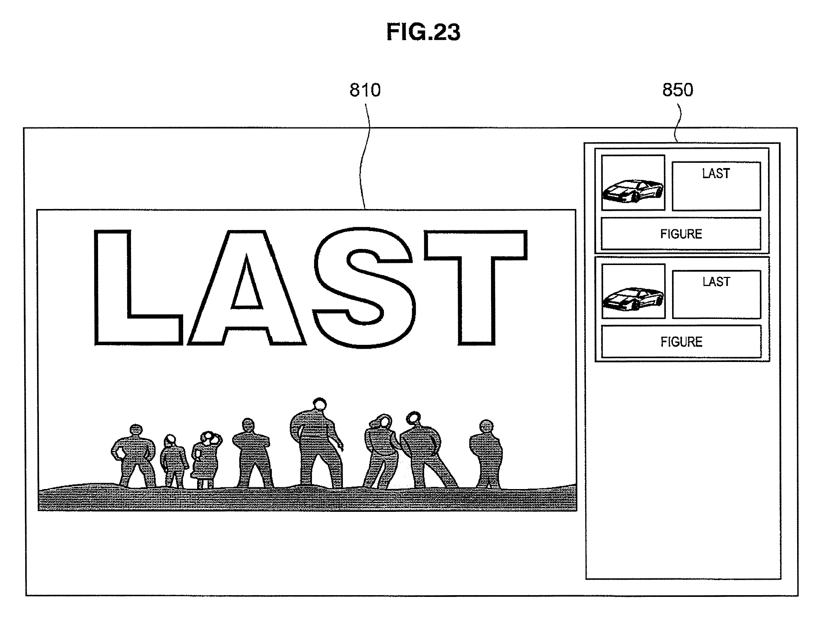

Service provision information for two products (figures) is displayed on the display screen that is shown in FIG. 23 as the third service provision information item 850 that pertains to the first program information item (the cast member A) that is included in the ECG scenario. The third service provision information item 850 includes product names, images, details, and retail prices. The display of the detail information and the product purchase processing are the same as in the case of the display screen that is shown in FIG. 21, so an explanation will be omitted.

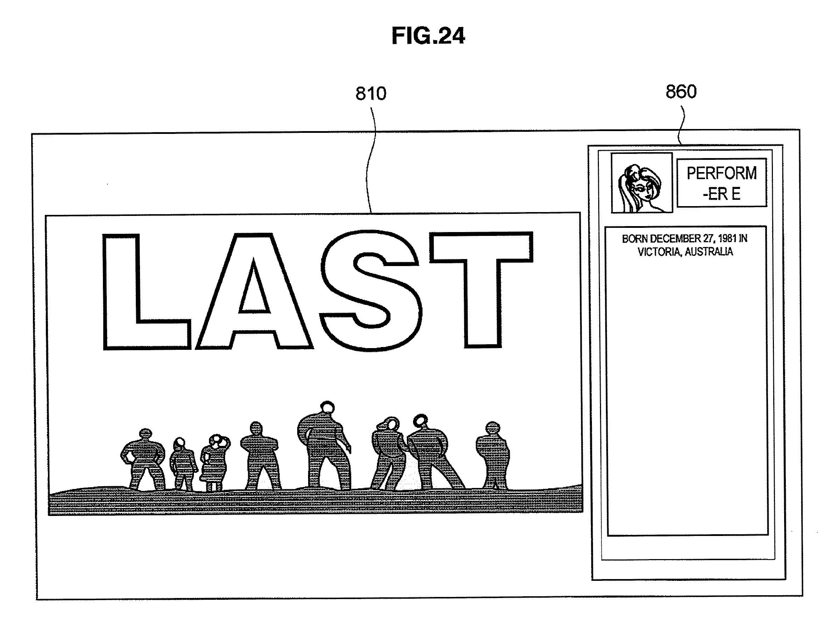

A name, "performer E", a photograph, and a brief biography for a cast member B are displayed on the display screen that is shown in FIG. 24 as the second program information item 860 that is included in the ECG scenario. If the user performs the entering operation on the remote control 190 with the display screen in this state, detail information for the cast member B will be provided by the ECG service provider 200 and displayed.

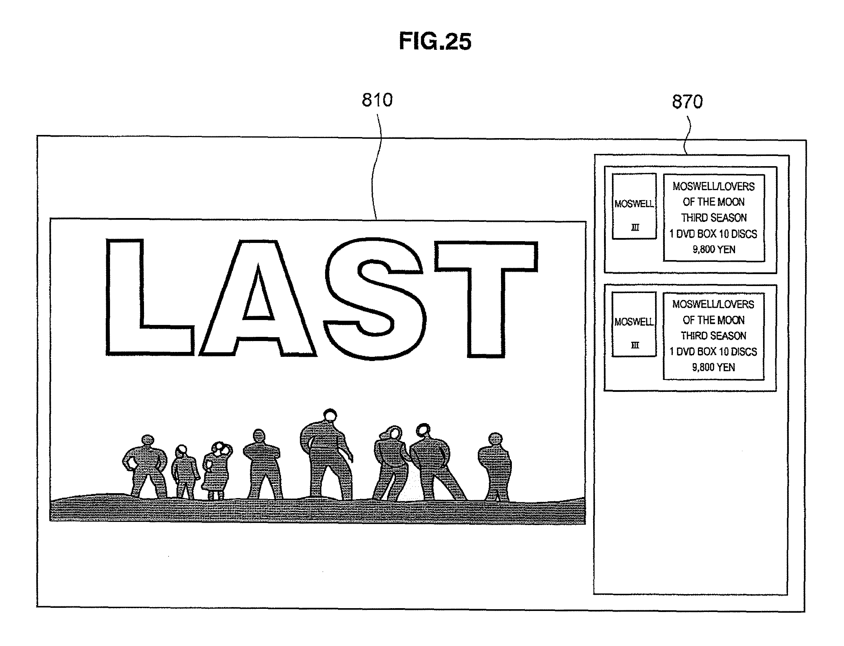

Service provision information for two DVDs is displayed on the display screen that is shown in FIG. 25 as the first service provision information item 870 that pertains to the second program information item (the cast member B) that is included in the ECG scenario. The service provision information item 870 includes product names, images, details, and retail prices. The display of the detail information and the product purchase processing are the same as in the case of the display screen that is shown in FIG. 21, so an explanation will be omitted.

### Execution example 3

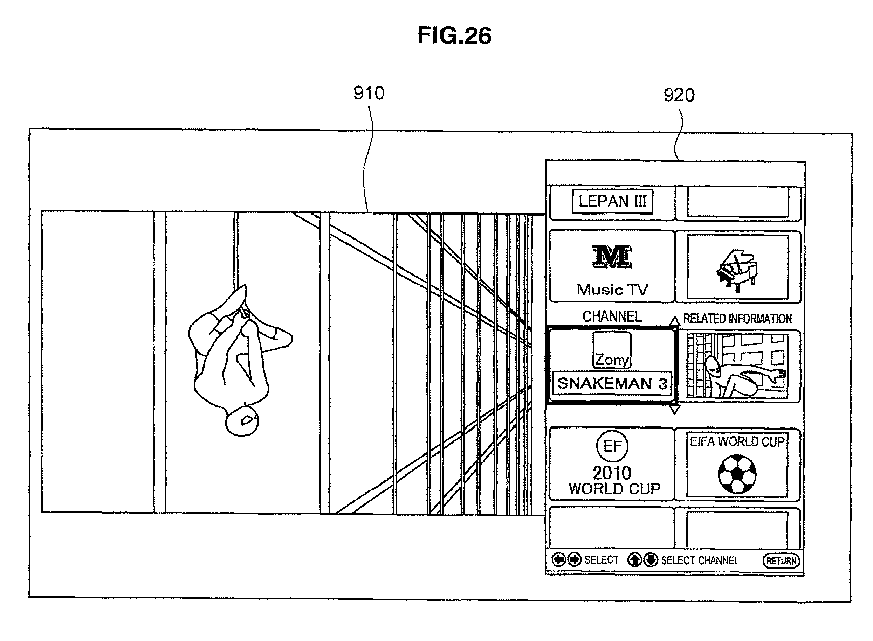

FIGS. 26 to 31 are explanatory figures that show display screens in example 3 of the execution of the ECG scenario. The display screens in execution example 3 will be explained below with reference to FIGS. 26 to 31.

In execution example 3, as shown in FIGS. 26 to 31, video information 910 for the program that is currently being viewed is displayed on the left side of the display screen, and information items that pertain to the program and are included in one of the ECG menu and the ECG scenario are displayed on the right side of the display screen. In this case, the ECG scenario information item that is displayed pertains to one of the program that is currently being viewed and a different program.··

Program information (channels and related information) that pertains to a plurality of programs that are currently available for viewing is displayed in an ECG menu 920 on the display screen that is shown FIG. 26. The program information in the ECG menu 920 includes logos for the content providers 300, program names, and still images.

With the display screen in this state, the user can operate the remote control 190 to select a desired channel and to select desired related information, based on the ECG menu 920. Note that in a case where the display frame for the ECG menu 920 cannot contain the program information for all of the programs that are currently available for viewing, the user can operate the remote control 190 to scroll the display of the ECG menu 920. On the display screen that is shown in FIG. 26, a program called "Snakeman 3" that is provided by a content provider called Zony has been selected from the ECG menu 920.

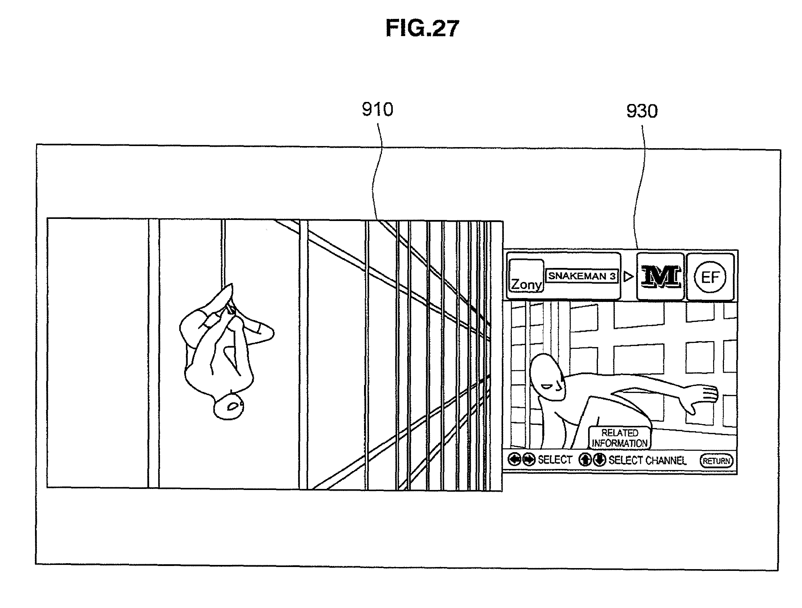

FIG. 27 shows a display screen in a case where related information that pertains to the program "Snakeman 3" has been selected from the ECG menu 920 on the display screen that is shown in FIG. 26. Program information (a still image) that pertains to the program "Snakeman 3" is displayed in an ECG menu 930 along with a related information button. In the upper portion of the ECG menu 930 display screen, "Snakeman 3", the program that is currently being viewed, is displayed along with program information (channels) that pertains to other programs called "Music TV" and "2010 World Cup" that are currently available for viewing.

With the display screen in this state, the user can operate (select) the related information button to start browsing the related information, such as the program information items, the service provision information items, and the like. The user can also operate the remote control 190 to select a desired channel based on the program information (the channels) that are displayed in the upper portion of the ECG menu 930. The user can also return to the display screen in FIG. 26 by operating (selecting) a Return button on the ECG menu 930 display screen.

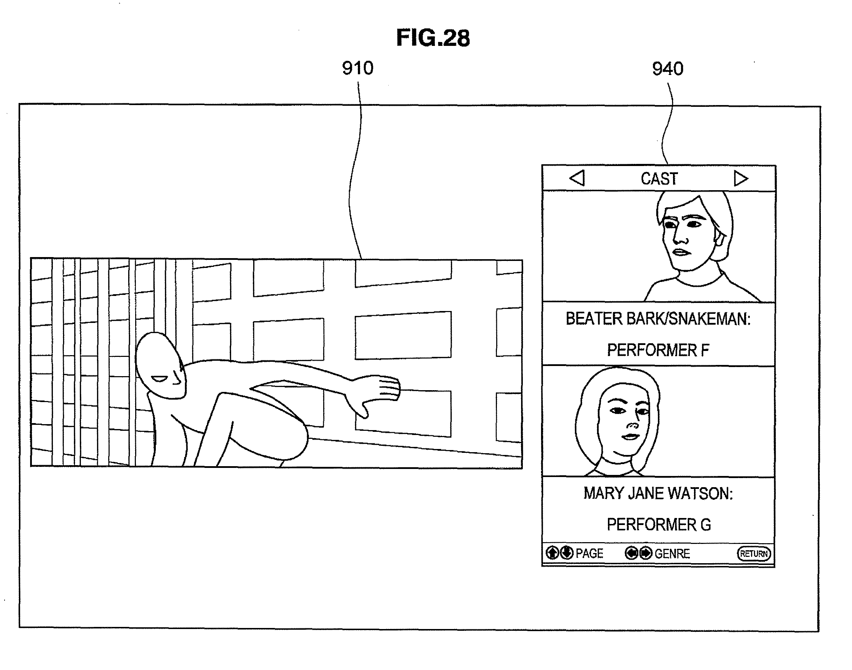

FIG. 28 shows a display screen in a case where the related information button has been operated (selected) on the ECG menu 930 on the display screen that is shown in FIG. 27. An ECG scenario display screen has newly appeared in the ECG menu 930 display area, and the ECG scenario has started. On the display screen that is shown in FIG. 28, a program information item 940 that pertains to the cast of the program "Snakeman 3" is displayed as a program information item of the ECG scenario. The program information item 940 includes the names, "performer F" and "performer G", the roles, and photographs of a cast member A and a cast member B.

With the display screen in this state, the user, having selected one of the cast members, can operate the remote control 190 to enter the selection in order to browse detail information that pertains to the cast member. By operating the remote control 190, the user can also manipulate the execution of the ECG scenario, such as by selecting a desired information item (a page, a genre) that pertains to the program or the like. The user can also return to the display screen in FIG. 27 by operating a Return button that is included in the ECG menu 940.

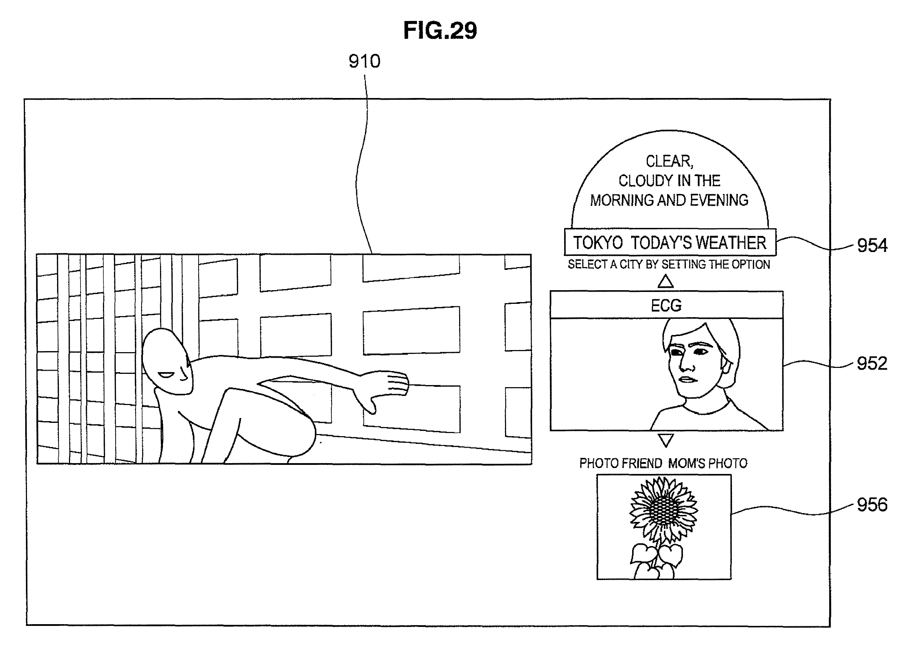

FIG. 29 shows a display screen in a case where the remote control 190 was not operated for a specified period of time while the display screen that is shown in FIG. 28 was being displayed. An ECG scenario display screen 952 is displayed at a reduced size at the middle level of the menu display screen. The ECG scenario is being executed, and the photograph of the cast member A is being displayed. Display screens 954 and 956 that display information that pertains to other programs are respectively displayed at the upper and lower levels of the menu display screen.

With the display screen in this state, the user can manipulate the execution of the ECG scenario, such as by operating the remote control 190 to select information that is being displayed on the ECG scenario display screen or the like. In a case where the remote control 190 is not operated with respect to the execution of the ECG scenario for a specified period of time, the execution of the ECG scenario continues, and the program information items and the service provision information items are displayed in order on the ECG scenario display screen 952. By operating the remote control 190, the user can also browse information that pertains to other programs.

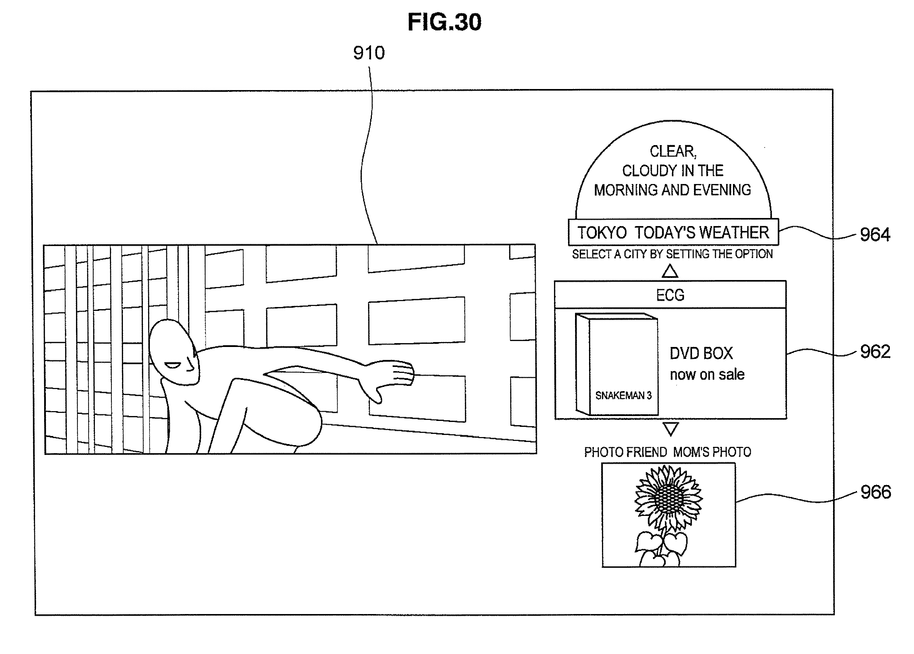

FIG. 30 shows a display screen in a case where the remote control 190 was not operated for a specified period of time while the display screen that is shown in FIG. 29 was being displayed. A DVD sales information item is being displayed as a service provision information item in an ECG scenario display screen 962 at the middle level of the menu display screen.

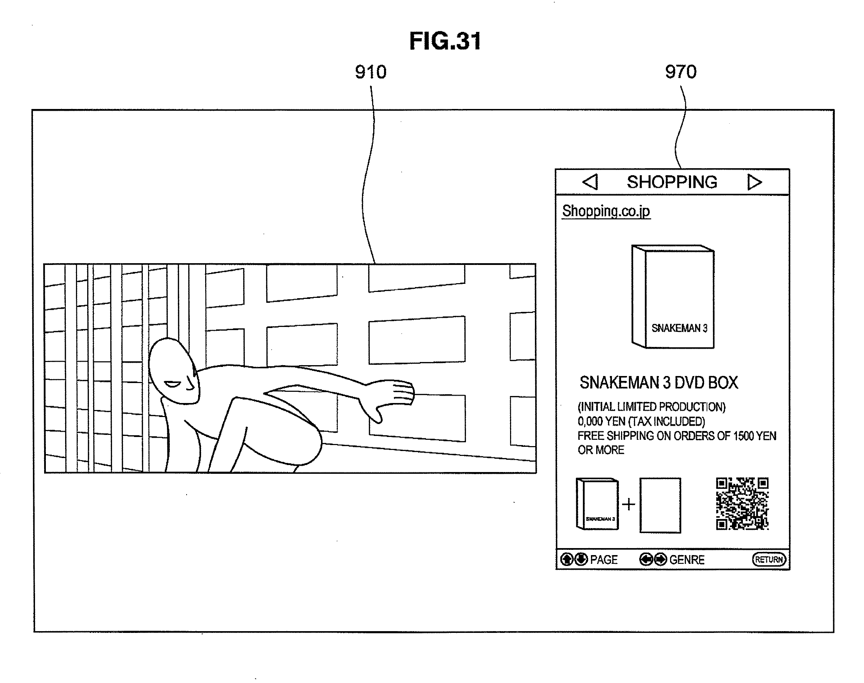

FIG. 31 shows a display screen in a case where the user has operated the remote control 190 to select the DVD sales information item on the display screen that is shown in FIG. 30. An ECG scenario display screen 970 is displayed at an enlarged size on the menu display screen, and details about the DVD sales information item are being displayed as detail information that pertains to the service provision information item. The detail information includes a product name, images, details, and a retail price, as well as a place to obtain more detailed information.

With the display screen in this state, the user can operate the remote control 190 to select the place to obtain more detailed information, which allows the user to browse a Web site for the place to obtain more detailed information. Then, after the detail information is displayed, specified product purchase processing will be carried out between the user of the receiver terminal 100 and the sponsor 400. By operating the remote control 190, the user can also manipulate the execution of the ECG scenario, such as by selecting a desired information item (a page, a genre) that pertains to the program or the like. The user can also return to the display screen in FIG. 30 by operating a Return button on the ECG menu 970.

It should be understood by those skilled in the art that various modifications, combinations, sub-combinations and alterations may occur depending on design requirements and other factors insofar as they are within the scope of the appended claims or the equivalents thereof.

## Claims

1. A receiving device that is connected through a communication network to an information providing device that provides information that pertains to a program, the receiving device comprising:
a channel selection portion for selecting a program to receive;
a program listing information receiving portion that receives, from the information providing device, program listing information that shows a plurality of programs that are currently available for viewing;
a selecting and entering portion for selecting a program based on the program listing information and entering a program selection;
a program designation information transmission portion that transmits to the information providing device, program designation information that designates one of a program selected by selecting a channel and a program selected or entered based on the program listing information;
a related information receiving portion that receives, from the information providing device, related information in which a plurality of information items that pertain to a program have been edited and linked to the program, the related information being applicable to the program that is designated by the program designation information; and
a display control portion that controls display of video information and the program listing information for one of a selected program and an entered program and controls sequential display of the plurality of the information items that are included in the received related information.

2. The receiving device according to claim 1,
wherein the related information receiving portion receives from the information providing device, as the related information, scenario information in which at least one of information sets have been put into the form of a scenario, the information set including one of only a program information item that is linked to a program and a combination of the program information item and at least one of service provision information items that are linked to the program information item.

3. The receiving device according to claim 2, further comprising:
a related information processing portion that processes the related information that is received from the information providing device,
wherein
the related information processing portion processes the related information such that the related information processing portion causes the display control portion to control display of each of a plurality of the information sets that are linked to the program in accordance with a predetermined prioritization and to control display of the program information item that is included in each of the information sets, and display of a plurality of the service provision information items that are linked to the program information item, in accordance with a predetermined prioritization.

4. The receiving device according to claim 3,
wherein the related information processing portion processes the related information such that the related information processing portion causes the display control portion to perform control such that the scenario information is displayed repeatedly.

5. The receiving device according to claim 2, 3 or 4, further comprising:
a processing request transmission portion that, in a case where a selection of the program information item has been entered, transmits to the information providing device a processing request that requests provision of detail information that pertains to the selected program information item, and that, in a case where a selection of the service provision information item has been entered, transmits to the information providing device a processing request that requests provision of detail information that pertains to the selected service provision information item; and
a detail information receiving portion that receives from the information providing device the detail information that is applicable to the processing request,
wherein the display control portion is caused to perform control such that the received detail information is displayed.

6. The receiving device according to one of the claims 1 to 5,
wherein
the program designation information transmission portion, in a case where the channel selection portion and the selecting and entering portion are not operated for a specified period of time while the program listing information is being displayed, transmits to the information providing device, in order, the program designation information that designates each of the plurality of the programs that are included in the program listing information,
and
the display control portion, based on the program designation information, performs control such that the related information that is received from the information providing device is displayed in order.

7. The receiving device according to one of the claims 1 to 6,
wherein
the display control portion performs control the display in a video display area displaying one of prerecorded video information and video information for one of a selected program and an entered program, a program listing information display area displaying the program listing information, and a related information display area displaying the related information,
and
the program listing information display area and the related information display area are disposed such that they are not superimposed on the video display area.

8. An information providing device that is connected through a communication network to a receiving device that receives a program, comprising:
a program listing information transmission portion that transmits, to the receiving device, program listing information that shows a plurality of programs that are currently available for viewing;
a related information storage portion that links to a program and stores related information in which a plurality of information items that pertain to the program have been edited such that they will be displayed in order;
a program designation information receiving portion that receives from the receiving device, program designation information that designates one of a program selected by selecting a channel and a program selected or entered based on the program listing information;
a related information extraction portion that extracts from the related information storage portion the related information that is applicable to the program that is designated by the program designation information; and
a related information transmission portion that transmits the extracted related information to the receiving device.

9. The information providing device according to claim 8,
wherein the related information storage portion links to a program and stores, as the related information, scenario information in which at least one of information sets have been put into the form of a scenario, the information set including one of only a program information item that is linked to a program and a combination of the program information item and at least one of service provision information items that are linked to the program information item.

10. The information providing device according to claim 9,
wherein the related information storage portion links to a program and stores, as the related information, scenario information that includes a plurality of the information sets that are linked to the program and prioritized, each of the information sets including one of only the program information item and a combination of the program information item and a plurality of the service provision information items that are linked to the program information item and prioritized.

11. The information providing device according to claim 9 or 10, further comprising:
a detail information linking portion that individually links to the program information item and the service provision information item detail information that pertains to the program information item and the service provision information item;
a processing request receiving portion that receives from the receiving device a processing request that requests provision of one of the detail information that pertains to the selected program information item and the detail information that pertains to the service provision information item;
a detail information acquisition portion that acquires the detail information that is requested by the received processing request; and
a detail information transmission portion that transmits to the receiving device the detail information that is acquired based on the processing request.

12. The information providing device according to claim 11,
wherein the detail information linking portion links to the service provision information item information for executing processing that is necessary for provision of a service that is based on the service provision information item.

13. An information providing system that comprises a receiving device that receives a program and an information providing device that provides information that pertains to the program, the receiving device and the information providing device being connected through a communication network,
wherein
the receiving device includes
a channel selection portion for selecting a program to receive,
a program listing information receiving portion that receives, from the information providing device, program listing information that shows a plurality of programs that are currently available for viewing,
a selecting and entering portion for selecting a program based on the program listing information and entering a program selection,
a program designation information transmission portion that transmits to the information providing device, program designation information that designates one of a program selected by selecting a channel and a program selected or entered based on the program listing information,
a related information receiving portion that receives related information from the information providing device, based on the program designation information, and
a display control portion that controls display of video information and the program listing information for one of a selected program and an entered program and controls sequential display of the plurality of the information items that are included in the received related information,
and
the information providing device includes
a program listing information transmission portion that transmits to the receiving device the program listing information that shows the plurality of the programs that are currently available for viewing,
a related information storage portion that links to a program and stores the related information in which a plurality of information items that pertain to the program have been edited,
a program designation information receiving portion that receives the program designation information from the receiving device,
a related information extraction portion that extracts from the related information storage portion the related information that is applicable to the program that is designated by the program designation information, and
a related information transmission portion that transmits the extracted related information to the receiving device.

14. An information providing method that is used for an information providing system in which a receiving device that receives a program and an information providing device that provides information that pertains to the program are connected through a communication network, the information providing method comprising the steps of:
linking to a program and storing related information in which a plurality of information items that pertain to the program have been edited, the linking and storing being done by the information providing device;
providing to the receiving device program listing information that shows a plurality of programs that are currently available for viewing, the providing being done by the information providing device;
one of selecting and entering a program based on one of a selection of a program to receive and the program listing information, the one of the selecting and the entering being done by the receiving device;
acquiring, from the receiving device, program designation information that designates one of a program selected by selecting a channel and a program selected or entered based on the program listing information, the acquiring being done by the information providing device;
extracting, from the program-linked and stored related information, the related information that is applicable to the program that is designated by the program designation information and providing the extracted related information to the receiving device, the extracting and the providing being done by the information providing device; and
controlling display of video information and the program listing information for one of a selected program and an entered program and controlling sequential display of the plurality of the information items that are included in the acquired related information, the controlling being done by the receiving device.

15. A program comprising instructions that command a computer to function as
a channel selection portion for selecting a program to receive;
a program listing information receiving portion that receives, from a information providing device, program listing information that shows a plurality of programs that are currently available for viewing;
a selecting and entering portion for selecting a program based on the program listing information and entering a program selection;
a program designation information transmission portion that transmits to the information providing device, , program designation information that designates one of a program selected by selecting a channel and a program selected or entered based on the program listing information;
a related information receiving portion that receives, from the information providing device, related information in which a plurality of information items that pertain to a program have been edited and linked to the program, the related information being applicable to the program that is designated by the program designation information; and
a display control portion that controls display of video information and the program listing information for one of a selected program and an entered program and controls sequential display of the plurality of the information items that are included in the received related information.

16. A program comprising instructions that command a computer to function as
a program listing information transmission portion that transmits, to a receiving device, program listing information that shows a plurality of programs that are currently available for viewing;
a related information storage portion that links to a program and stores related information in which a plurality of information items that pertain to the program have been edited such that they will be displayed in order;
a program designation information receiving portion that receives from the receiving device, program designation information that designates one of a program selected by selecting a channel and a program selected or entered based on the program listing information;
a related information extraction portion that extracts from the related information storage portion the related information that is applicable to the program that is designated by the program designation information; and
a related information transmission portion that transmits the extracted related information to the receiving device.
